# EUROPÄISCHE PATENTSCHRIFT

(11) **EP 2 812 568 B1**
(45) Veröffentlichungstag und Bekanntmachung des Hinweises auf die Patenterteilung: **07.08.2019**
(21) Anmeldenummer: 12773202.2
(22) Anmeldetag: 17.09.2012
(51) Int. Cl.: F16C 35/06, F16C 33/58, F16C 19/50, F16C 19/49, F03D 80/70, F03D 7/02, F03D 1/06

(54) **WÄLZLAGERANORDNUNG ZUR LAGERUNG VON TEILEN EINER WINDKRAFTANLAGE, SOWIE WINDKRAFTANLAGE MIT EINEM DERART AUSGESTALTETEN BLATTLAGER**
ROLLER BEARING ARRANGEMENT FOR MOUNTING PARTS OF A WIND POWER PLANT AND A WIND POWER PLANT HAVING A BLADE BEARING DESIGNED IN SUCH A MANNER
ENSEMBLE PALIER À ROULEMENT DESTINÉ À SUPPORTER DES PIÈCES D'UNE ÉOLIENNE, AINSI QU'ÉOLIENNE POURVUE D'UN PALIER DE PALE AINSI RÉALISÉ

(30) Priorität: 07.02.2012 DE 102012002203
(43) Veröffentlichungstag der Anmeldung: 17.12.2014
(73) Patentinhaber: IMO Holding GmbH, 91350 Gremsdorf (DE)
(72) Erfinder: SCHRÖPPEL, Werner, 90530 Wendelstein (DE)
(74) Vertreter: Schmidt, Steffen J.
(86) Internationale Anmeldenummer: PCT/EP2012/003875
(87) Internationale Veröffentlichungsnummer: WO 2013/117203

(56) Entgegenhaltungen:
- WO-A1-2007/006301
- WO-A1-2008/092447
- DE-A1-102008 049 812
- DE-A1-102008 049 814

## Beschreibung

Die Erfindung richtet sich einerseits auf eine Wälzlageranordnung, vorzugsweise auf ein Großwälzlager mit einem Durchmesser von 0,5 m oder mehr, zur Lagerung von Teilen einer Windkraftanlage, insbesondere als Blattlager einer Windkraftanlage, mit wenigstens zwei konzentrisch zueinander sowie zumindest bereichsweise ineinander angeordneten, ringförmigen, gegeneinander verdrehbaren Anschlusselementen zum Anschluss an gegeneinander verdrehbaren Teilen der Windkraftanlage, wobei zwei gegeneinander verdrehbare Anschlusselemente durch einen Spalt voneinander getrennt sind und einander in radialer Richtung ganz oder teilweise überlappen, wobei ferner im Bereich eines Spaltes in radial überlappenden Bereichen der ringförmigen Anschlusselemente wenigstens zwei Reihen von Wälzkörpern vorgesehen sind, welche jeweils entlang von zwei einander zumindest bereichsweise in radialer Richtung überlappenden Laufbahnen abrollen, sowie wenigstens eine weitere Reihe von Wälzkörpern, deren Laufbahnen sich in radialer Richtung nicht überlappen; sowie andererseits auf eine derartige Wälzlageranordnung als Blattlager einer Windkraftanlage mit einem Windrad, das um eine zur Windrichtung etwa parallele Achse rotiert, wobei von der Nabe des Rotors ein oder vorzugsweise mehrere, langgestreckte Rotorblätter etwa radial auskragend sowie mittels je eines Blattlagers um ihre Längsachse verdrehbar angeordnet sind.

Großwälzlager mit einem Durchmesser von 0,5 m oder mehr zur Lagerung der Rotorblätter an der Nabe des Windrades einer Windkraftanlage sind extremen mechanischen Belastungen ausgesetzt.

Denn bereits im Fall einer gleichbleibenden Windbelastung erzeugt der Winddruck neben einer Radialkraft auch sehr starke Kippmomente, da die Wurzel des Rotorblattes im Gegensatz zu dessen Spitze dem Winddruck nicht nachgeben kann und somit als Drehpunkt wirkt. Während das Rotorblatt der tangential zum Nabenumfang gerichteten Momentenkomponente unter Antrieb des Nabenrotors ausweichen kann, ist dies gegenüber der Momentenkomponente parallel zur Rotorachse nicht möglich. Diese nicht unerhebliche Belastung muss das Rotorlager ohne nachzugeben ständig auf die Nabe übertragen.

Hinzu kommt die aus der Gewichtskraft des Rotorblattes resultierende Belastung. Diese ändert sich bei jedem Umlauf eines Rotorblattes um die Nabe: Steht das Rotorblatt vertikal, wirkt dessen Gewichtsbelastung in Richtung der Blattlagerdrehachse als weitgehend harmlose, axiale Zug- oder Druckkraft. Bei einer horizontalen Stellung des Rotorblattes ergibt sich jedoch eine Kombination aus einer Radialkraft und einem Kippmoment, wobei letzteres für das Wälzlager die größere Belastung darstellt. Besonders die mit der ständig wechselnden Kraft- und Momentenrichtung verbundene Wechsellast ist nur schwer zu beherrschen.

Hinzu treten weitere, nicht unerhebliche Wechsellasten, bspw. infolge unterschiedlicher Windgeschwindigkeiten in verschiedener Höhe, welchen ein Rotorblatt während seiner Kreisbahn immer wieder ausgesetzt ist, so dass u.a. auch das Antriebsmoment nicht konstant ist, sondern ständig schwankt.

Nicht vergessen werden sollte in diesem Zusammenhang der Umstand, dass nicht selten eben keine gleichförmige Windströmung vorliegt, sondern böiger Wind mit ständig und unvorhersehbar variierender Windrichtung und -stärke, welche eine noch so gute Regelung nicht ausregeln kann, da es hierfür kein Rechenmodell gibt.

Schließlich darf nicht unerwähnt bleiben, dass ein Rotorblatt jahrelang jeglicher Witterung ausgesetzt bleibt - und damit auch Stürmen oder gar Orkanen nicht ausweichen kann, selbst wenn es so weit als möglich aus dem Wind genommen wird.

Daraus ist ersichtlich, dass Rotorlager wahre Wunder zu vollbringen haben, um das Rotorblatt trotz all dieser Widrigkeiten über viele Jahre hinweg zu stabilisieren.

Aus diesem Grunde ist bspw. in der WO 2008/052778 A1 vorgeschlagen worden, als Blattlager mehrreihige Kugellager einzusetzen, wobei bis zu sechs Kugelreihen eine ausreichende Stabilität erzielen sollen. Gerade zur Aufnahme von Kippmomenten werden besonders starke Axiallagerreihen verwendet; davon sind bis zu fünf Reihen vorgesehen, bei vorzugsweise nur einer einzigen, radial wirkenden Kugelreihe. Dabei sieht die Vorerfindung vor, bis zu drei axialen Kugellagerreihen in einer gemeinsamen Ebene anzuordnen, sozusagen koaxial ineinander. Es hat sich jedoch gezeigt, dass sich bei einer derartigen Vielzahl von Wälzkörperreihen nicht nur der Zusammenbau des Lagers sehr kompliziert gestaltet; auch der Anschluss der einzelnen Lagerringe an dem Rotorblatt einerseits und an der Nabe des Windrades andererseits ist problematisch. Denn die Laufbahnen für drei konzentrisch zueinander angeordnete Wälzkörperreihen nehmen die gesamte Breite eines Wälzlagerrings ein und erstrecken sich entlang von dessen gesamter Stirnseite nebeneinander bzw. konzentrisch ineinander. Diese Stirnseite ist daher weder als Anschlussfläche verwendbar noch lassen sich dort irgendwelche Befestigungsmittel anordnen. Als Ausweg ist die gegenüberliegende Stirnseite als Anschlussfläche konzipiert und trägt kranzförmig verteilt angeordnete Sacklochbohrungen mit Innengewinde zum Eindrehen von Gewindeschrauben. Diese Befestigungstechnik ist jedoch für moderne Rotorblätter und/oder Naben von Windrädern nicht immer geeignet, insbesondere wenn dort ihrerseits nur Sacklochbohrungen mit Innengewinde zum Eindrehen von Gewindeschrauben vorgesehen sind.

Die WO 2007/006301 betrifft eine Wälzlageranordnung mit drei konzentrisch zueinander sowie zumindest bereichsweise ineinander angeordneten, ringförmigen, gegeneinander verdrehbaren Anschlusselementen mit wenigstens je einer ebenen Anschlussfläche zum Anschluss an insgesamt zwei verschiedene Maschinen- oder Anlageteile. Dabei sind jeweils zwei gegeneinander verdrehbare Anschlusselemente durch einen Spalt voneinander getrennt und überlappen einander in ihrer radialen Erstreckung teilweise. Im Bereich eines Spaltes sind in radial überlappenden Bereichen der ringförmigen Anschlusselemente jeweils zwei Reihen kugelförmiger Wälzlager vorgesehen, welche jeweils entlang zweier einander in radialer Richtung überlappender Laufbahnen abrollen. Die Mittelpunkte der kugelförmigen Wälzkörper der vier Kugelreihen bewegen sich entlang von vier Kreisbahnen um die Drehachse des Wälzlagers, deren Durchstoßpunkte durch eine Querschnittsebene des Wälzlagers radial zu dessen Drehachse an den Ecken eines Vierecks liegen. Das radial innerste Anschlusselement sowie das radial äußerste Anschlusselement sind an dem einem Maschinen- oder Anlagenteil angeschlossen und das radial mittlere Anschlusselement ist an dem jeweils anderen Maschinen- oder Anlagenteil angeschlossen.

Aus den Nachteilen des beschriebenen Standes der Technik resultiert das die Erfindung initiierende Problem, eine gattungsgemäße Wälzlageranordnung bzw. eine damit ausgerüstete Windkraftanlage derartig weiterzubilden, dass
trotz hoher oder höchster Stabilität insbesondere gegenüber Kippmomenten und/oder Wechsellasten möglichst keine Einschränkungen hinsichtlich dem Anschluss an den betreffenden Maschinen- oder Anlagenkomponenten, insbesondere an einem Rotorblatt eines Windrades einerseits und der Nabe einer Windkraftanlage andererseits, zu beachten sind.

Die Lösung dieses Problems gelingt dadurch, dass eine gattungsgemäße Wälzlageranordnung die Merkmale des Anspruchs 1 aufweist.

Demgemäß wird bei der Erfindung das mittlere Anschlusselement von den anderen beiden nur an zwei Seiten umgriffen, nämlich an seiner radial inneren und an seiner radial äußeren Seite. Während bei der WO 2008/052778 A1 ein ringförmiges Anschlusselement an bis zu drei Seiten umgriffen wird, wird bei der Erfindung zwar das mittlere Anschlusselement an seiner Innen- und Außenseite von je einem weiteren Anschlusselement flankiert; diese versperren jedoch nicht den Zugang zu den beiden Stirnseiten des mittleren Anschlusselements; insbesondere dient keine der beiden Stirnseiten des mittleren. Anschlusselements als Laufbahn für Wälzkörperreihen gleich welcher Gestalt. Stattdessen besteht die Möglichkeit, eine Stirnseite des mittleren Rings als Anschlussfläche zu verwenden und darin ggf. Durchgangsbohrungen zur Befestigung an einem Maschinen- oder Anlagenteil anzuordnen, so dass auch eine Befestigung mittels dort hindurch gesteckter und in die Anschlusskonstruktion eingeschraubter Schrauben möglich ist. An der der Anschlussfläche gegenüber liegenden Stirnseite finden dann die Unterseiten der Schraubenköpfe hinreichend Platz zur Anlage und können damit das Anschlusselement fest gegen die Anschlusskonstruktion pressen. Ein weiterer, keinesfalls zu unterschätzender Vorteil besteht darin, dass genau genommen eigentlich zwei zueinander konzentrische Lager vorhanden sind, so dass bspw. eine Demontage eines Rings möglich ist und/oder der Austausch der Wälzkörper einer derartigen Lager-Teilbaugruppe, während die jeweils andere Lager-Teilbaugruppe vorübergehend alleine die Stabilisierung des Rotorblattes übernimmt.

Die Erfindung zeichnet sich weiterhin dadurch aus, dass die radiale Überlappung zweier Anschlusselemente gleich oder größer ist als der Radius eines in dem radial überlappenden Bereich abrollenden Wälzkörpers.

Andererseits sollten sich die einander überlappenden Laufbahnen entlang einer radialen Erstreckung von der Größe des Radius des betreffenden Wälzkörpers überlappen oder mehr.

Es hat sich als günstig erwiesen, dass im Bereich jedes der beiden Spalte in radial überlappenden Bereichen der ringförmigen Anschlusselemente jeweils wenigstens zwei Reihen von Wälzkörpern vorgesehen sind, welche jeweils entlang von zwei einander zumindest bereichsweise in radialer Richtung überlappenden Laufbahnen abrollen. Indem die Lagerlaufbahnen selbst in radial überlappenden Bereichen der betreffenden Anschlusselemente angeordnet sind, sind diese in der Lage, teilweise oder überwiegend axiale Kräfte zu übertragen. Gerade dies ist aber bei Großlagern für Strömungskraftanlagen, insbesondere für die Rotorblätter von Windkraftanlagen, besonders wichtig, um die dort verstärkt auftretenden Kippmomente aufnehmen und beherrschen zu können. Je eine der beiden Wälzlagerreihen in einem Spalt übernimmt dabei axiale Druckkräfte, die andere axiale Zugkräfte. Durch die doppelte Anordnung dieser beiden Reihen, nämlich jeweils wenigstens zwei derartige Reihen pro Spalt, werden die auftretenden Axialkräfte von dem mittleren Ring gleichmäßig an dessen radialer Innenseite und an dessen radialer Außenseite abgeleitet, so dass eine bspw. elliptische Verformung des mittleren Rings nicht zu befürchten ist. Auch eine Verformung der beiden äußeren Ringe ist nicht zu befürchten, weil dort jeweils nur die halben Axialkräfte auftreten. Auch die Wälzkörper selbst werden geschont, weil deren Anzahl gegenüber herkömmlichen Lagerbauformen mindestens verdoppelt ist.

Eine bevorzugte Realisierung erfährt die Erfindung dadurch, dass das mittlere Anschlusselement in axialer Richtung in wenigstens drei Abschnitte gegliedert ist, nämlich einen ersten, an seine Anschlussfläche angrenzenden Abschnitt, einen zweiten, an seine gegenüber liegende Stirnseite angrenzenden Abschnitt sowie einen dritten, dazwischen angeordneten Abschnitt, der gegenüber den ersten beiden in radialer Richtung gleichermaßen vor- oder zurück springt. An den Übergängen zwischen dem ersten und dem dritten Abschnitt sowie zwischen dem zweiten und dem dritten Abschnitt ergeben sich jeweils Stufen, deren überhängende Bereiche als Laufbahnen ausgebildet sind. Indem der dritte, also mittlere Abschnitt gegenüber den anderen beiden Abschnitten entweder vom Zentrum des mittleren Rings in radialer Richtung vorspringt oder zurückweicht, ergeben sich jeweils wenigstens zwei derartige Stufen pro Spalt.

Sofern pro Spalt zwei einander radial entgegen laufende, stufenförmige Versetzungen vorgesehen sind, nämlich zwischen einem mittleren Abschnitt und zwei äußeren - einem oberen und einem unteren - Abschnitten, so hat der mittlere Abschnitt entweder die Gestalt einer rundumlaufenden Nase bzw. eines rundumlaufenden Bundes oder die Gestalt einer rundumlaufenden Nut bzw. Vertiefung. An deren Flanken befindet sich je eine Laufbahn des mittleren Anschlusselements. Diese beiden Laufbahnen sind daher entweder einander zugewandt, nämlich im Fall einer rundum laufenden Nut oder Vertiefung, oder sie sind beide einander abgewandt, nämlich im Fall einer rundum laufenden Nase oder Erhebung. Jedenfalls weisen diese beiden, dem selben Spalt zugeordneten Laufbahnen des mittleren Anschlusselements in entgegen gesetzte axiale Richtungen, so dass die darauf abrollenden Wälzkörper jeweils Axialkräfte in unterschiedlichen Axialrichtungen übertragen können.

Bevorzugt sind die entlang von zwei einander zumindest bereichsweise in radialer Richtung überlappenden Laufbahnen abrollenden Wälzkörper als Kugeln ausgebildet. Kugelförmige Wälzkörper können je nach Anordnung der Laufbahnen beliebige Tragwinkel zwischen 0° und 90° einnehmen und somit also neben Axialkräften gleichzeitig auch Radialkräfte übertragen. Daher könnte bei einer derartigen Anordnung auf eine Radialreihe verzichtet oder jene erheblich kleiner dimensioniert werden.

Die Erfindung erfährt eine bevorzugte Weiterbildung durch insgesamt wenigstens vier Reihen von zwischen jeweils zwei einander zumindest bereichsweise in radialer Richtung überlappenden Laufbahnen abrollenden, kugelförmigen Wälzkörpern. Wie oben bereits angedeutet, ergibt sich eine derartige Anordnung bei zwei in radialer Richtung gegeneinander versetzten Wälzkörperreihen pro Spalt, wobei die beiden Spalte ja in radialer Richtung gegeneinander versetzt sind.

Es liegt im Rahmen der Erfindung, dass sich die Mittelpunkte der kugelförmigen Wälzkörper der vier Kugelreihen entlang von vier Kreisbahnen um die Drehachse des Wälzlagers bewegen, deren Durchstoßpunkte durch eine Querschnittsebene des Wälzlagers radial zu dessen Drehachse an den Ecken eines Vierecks liegen, vorzugsweise an den Ecken eines Rechtecks oder Quadrats. Anders ausgedrückt, innerhalb einer radialen Schnittebene entlang der Lagerdrehachse, in der sich jeweils gerade der Großkreis eines kugelförmigen Wälzkörpers jeder Kugelreihe befindet, ergeben die gedachten direkten Verbindungslinien der Mittelpunkte der kugelförmigen Wälzkörper zur axialen Kraftübertragung ein vorzugsweise rechtwinkliges Viereck, insbesondere ein Rechteck oder Quadrat. Durch den zuvor erläuterten axialen Versatz der Wälzkörperreihen pro Spalt und den radialen Versatz zwischen den beiden Spalten resultiert eine derartige Anordnung der Wälzkörper in einem Viereck des Wälzlagerquerschnitts bzw. entlang der Kanten eines virtuellen, zu einem Kreis um die Lagerdrehachse gebogenen Vierkantstabs. Sofern dieser virtuelle, ringförmig gebogene Vierkantstab jeweils rechtwinklige Kanten aufweist, liegen die Wälzkörperreihen jeweils symmetrisch zueinander, und auftretende Kräfte werden daher jeweils symmetrisch aufgeteilt, so dass der mittlere Ring bei rein axialen Belastungen - Axialkräften und/oder Kippmomenten - keine radiale Verbiegung erfährt, also in höchstem Maße steif reagiert.

Es liegt im Rahmen der Erfindung, dass die kugelförmigen Wälzkörper unterschiedlicher Reihen an einander entsprechenden radialen Positionen gleich groß sind.

Andererseits besteht auch die Möglichkeit, dass die kugelförmigen Wälzkörper aller vier Reihen gleich groß sind.

Erfindungsgemäß kann weiterhin vorgesehen sein, dass wenigstens zwei, vorzugsweise alle vier Kugelreihen jeweils gleiche Abstände zu dem Mittelpunktsradius des Kranzes von Befestigungselementen des mittleren Anschlusselements aufweisen.

Eine Ausführungsform der Erfindung zeichnet sich weiterhin dadurch aus, dass die Verbindungslinie zwischen zwei einander diametral gegenüber liegenden Ecken des Vierecks der Mittelpunkts-Kreisbahnen die betreffenden Laufbahnquerschnitte allesamt entweder im oder nahe dem Zentrum ihres Schmiegebereichs schneidet oder an jeder der betreffenden zwei Kugelreihen jeweils die dortige Verbindungslinie zwischen den Zentren der Schmiegebereiche beider Laufbahnquerschnitte einer Kugelreihe etwa rechtwinklig schneidet. Während im ersteren Falle bei der Überlagerung von Axial- und Radialkräften die von den beteiligten vier Wälzkörperreihen übertragenen Kräfte ähnlich wie bei einem X zu einem gemeinsamen Zentrum hin oder von diesem Weg gerichtet sind, laufen die Kraftlinien der zu übertragenen Kräfte im zweiten Fall ähnlich der Seitenkanten einer Raute oder eines auf der Spitze stehenden Quadrats etwa tangential zu dem Zentrum des Ringquerschnitts. Zwar wird im ersteren Falle der mittlere Ring querschnittlich auf Druck belastet und kann sozusagen zwischen den beiden äußeren Ringen "eingespannt" werden, und Verwindungskräften wird in geringerem Maße entgegengewirkt, während dies im letzteren Falle genau umgekehrt ist; dennoch weist in beiden Fällen jede der vier potentiellen Druckkraftrichtungen in vier unterschiedliche Richtungen, entsprechend der Richtungen vom Ursprung in das Innere der vier Quadranten eines kartesischen Koordinatensystems. Damit können von einem erfindungsgemäßen Lager alle denkbaren Lastfälle aufgefangen werden.

Wenn die Verbindungslinie zwischen den Zentren der Schmiegebereiche beider Laufbahnquerschnitte einer Kugelreihe entweder mit der Verbindungslinie zwischen den Mittelpunkts-Kreisbahnen der betreffenden Kugelreihe einerseits sowie der im Viereck der Mittelpunkts-Kreisbahnen diametral gegenüber liegenden Kugelreihe andererseits zusammenfällt oder diese im Zentrum der ersten Kugelreihe schneidet, so wird eine Kugel von den Schmiegebereichen ihrer beiden Laufbahnen symmetrisch zu ihren betreffenden Berührungspunkten umfangen und also optimal geführt. Insbesondere kann dadurch ein Kontakt mit den Laufbahnkanten vermieden werden, was ansonsten zu Beschädigungen der Kugeln führen könnte.

Die Erfindung sieht weiterhin vor, dass die Laufbahnquerschnitte einer Kugelreihe bezüglich einer Hauptebene des Wälzlagers spiegelsymmetrisch sind zu den Laufbahnquerschnitten einer axial versetzten Kugelreihe. Dadurch ergibt sich einerseits ein Höchstmaß an Symmetrie; andererseits sind bei einer derartigen Anordnung die übertragbaren, axialen Zug- und Druckkräfte etwa gleich groß, so dass die Dimensionierung anhand eines einzigen Maximalwertes erfolgen kann, unabhängig von dessen Wirkungsrichtung. Darüber hinaus sollten die Laufbahnquerschnitte einer Kugelreihe bezüglich einer zur Lagerdrehachse parallelen Mittelachse in der Querschnittsebene spiegelsymmetrisch sein zu den Laufbahnquerschnitten einer radial versetzten Kugelreihe. Solchenfalls sind auch die übertragbaren Radialkräfte unabhängig von deren Richtung etwa gleich, egal, ob diese nach innen oder nach außen gerichtet sind.

Wenn außerdem die Laufbahnquerschnitte einer Kugelreihe eines Punktes in der Querschnittsebene punktsymmetrisch sind zu den Laufbahnquerschnitten einer diagonal, d.h. axial und radial versetzten Kugelreihe, so ist auch das Verhalten des mittleren Anschlusselements gegenüber Kippmomenten optimal austariert und jegliche Neigung zu einem einseitigen Ausweichen wird so weit als möglich unterbunden.

Die Erfindung lässt sich dahingehend weiterbilden, dass die Tragwinkel der zwischen jeweils zwei einander zumindest bereichsweise in radialer Richtung überlappenden Laufbahnen abrollenden, kugelförmigen Wälzkörpern 45° oder mehr betragen, vorzugsweise 50° oder mehr, insbesondere 60° oder mehr. Dies bedeutet, diese Wälzkörperreihen sind für überwiegende Belastung durch Axialkräfte und/oder Kippmomente ausgelegt. Dies entspricht insbesondere bei der Lagerung von Rotorblättern an der Nabe einer Windkraftanlage dem hauptsächlich auftretenden Belastungsfall.

Die Erfindung lässt sich weiterbilden durch wenigstens eine in einem der beiden Spalte angeordnete Reihe von Wälzkörpern, deren Tragwinkel kleiner ist 45°, beispielsweise gleich oder kleiner als 40°, vorzugsweise gleich oder kleiner 30°, insbesondere etwa 0°. Wenigstens eine derartige Wälzkörperreihe übernimmt hauptsächlich die Aufgabe einer ggf. zusätzlichen Zentrierung des mittleren Anschlusselements in radialer Richtung. Da die Belastung in dieser Richtung bei der Lagerung der Rotorblätter an der Nabe einer Windkraftanlage zumeist deutlich geringer ist als eine axiale Belastung, können diese Wälzkörper kleiner ausgeführt sein als die zuvor beschriebenen, überwiegend in axialer Richtung eingespannten Wälzkörper. Ggf. kann hier anstelle einer Wälzlagerung auch wenigstens ein Gleitlager oder jegliche andere Lagerart verwendet werden. Andererseits können natürlich auch in beiden Spalten derartige Radiallager vorgesehen sein.

Es hat sich bewährt, dass die Wälzkörper mit einem Tragwinkel von weniger als 45° zwischen zwei Laufbahnen abrollen, welche sich radial jenseits des radial überlappenden Bereichs der betreffenden Anschlusselemente befinden. Innerhalb einer gemeinsamen Querschnittsebene liegen die Mittelpunkte der Wälzkörper in den drei Wälzkörperreihen an den Ecken eines vorzugsweise gleichschenkligen Dreiecks, wobei dessen Spitze der radialen Kugelreihe entspricht und die Ecken zu beiden Seiten der Basis je einer axialen Kugelreihe. Es ergibt sich dadurch ein Höchstmaß an Symmetrie, wodurch die erfindungsgemäße Lagerung leicht zu berechnen und zu dimensionieren ist.

Die Wälzkörper mit einem Tragwinkel von weniger als 45° können rollenförmig ausgebildet sein mit einer Längsachse, die parallel zu der Lagerdrehachse ausgerichtet ist. Solchenfalls sind bereits relativ kleine Wälzkörper ausreichend, um die ohnehin nur in begrenztem Umfang auftretenden Radialbelastungen aufzunehmen. Dadurch kann die Baugröße der erfindungsgemäßen Wälzlagerung zumindest in axialer Richtung auf ein Minimum reduziert werden.

Erfindungsgemäß sind in dem mittleren Anschlusselement und/oder in einem oder beiden der jeweils anderen Anschlusselemente jeweils kranzförmig verteilt angeordnete Befestigungselemente vorgesehen, beispielsweise Befestigungsbohrungen, vorzugsweise Durchgangsbohrungen mit zu der Lagerdrehachse paralleler Längsachse, insbesondere ohne Innengewinde. Insbesondere derartige Durchgangsbohrungen erlauben eine Arretierung mittels diese durchgreifender Schrauben, welche in der jeweiligen Anschlusskonstruktion - bspw. Rotorblatt oder -nabe - eingeschraubt und dadurch verankert werden.

Die Erfindung lässt sich dahingehend weiterbilden, dass das mittlere Anschlusselement und/oder eines oder beide der jeweils anderen Anschlusselemente entlang einer Hauptebene des Lagers unterteilt ist/sind. Dadurch wird die Montage an/mit einem Nasenring ermöglicht, der an beiden Flanken seiner rundumlaufenden Nase umgriffen wird.

Es hat sich bewährt, dass ein oder beide Lagerspalte an wenigstens einem Mündungsbereich abgedichtet sind. Zumindest eine außen liegende Mündung zwischen dem radial äußeren Anschlusselement und dem mittleren Anschlusselement sollte abgedichtet sein, um den dahinter liegenden Spalt den Witterungseinflüssen zu entziehen; die benachbarte Spaltmündung jenseits der Anschlussfläche des mittleren Anschlusselements liegt zwar innerhalb der Anordnung, ist jedoch zum Innenraum des Rotorblattes in offen. Für den Fall, das sich dort erhöhte Feuchtigkeit ansammelt, sollte auch dieser Mündungsbereich abgedichtet sein. Schließlich liegen die übrigen beiden Spaltmündungen innerhalb des Nabenkörpers, aber auch dort kann Feuchtigkeit gelangen, so dass auch dort eine Dichtung sinnvoll ist.

Eine bevorzugte Konstruktionsvorschrift sieht vor, dass in dem innersten oder in dem äußersten Anschlusselement oder vorzugsweise in dem innersten und dem äußersten Anschlusselement Einrichtungen zum Einführen eines Schmiermittels vorgesehen sind, bspw. Schmiernippel. Als Schmiermittel dient bevorzugt Schmierfett; die Verwendung von Schmieröl ist grundsätzlich auch denkbar, wenngleich diese einen deutlich gesteigerten Dichtungsaufwand bedingt, um das flüssige Schmiermittel an einem Entweichen zu hindern.

Weitere Vorteile ergeben sich dadurch, dass sich die Schmiereinrichtungen, insbesondere Schmiernippel, jeweils auf Höhe der Wälzkörperreihen befinden. Dort befindet sich der zentrale Wirkungsbereich des Schmiermittels, so dass dieses beim Nachschmieren besonders an diese Stellen befordert werden soll. Eine erfindungsgemäße Windkraftanlage mit einem Windrad, das um eine zur Windrichtung etwa parallele Achse rotiert, wobei von der Nabe des Rotors ein oder vorzugsweise mehrere, langgestreckte Rotorblätter etwa radial auskragend sowie mittels je eines Blattlagers um ihre Längsachse verdrehbar angeordnet sind, wobei ein oder mehrere oder alle Blattlager als Wälzlageranordnung ausgebildet sind, vorzugsweise als Großwälzlager mit einem Durchmesser von 0,5 m oder mehr, mit wenigstens zwei konzentrisch zueinander sowie zumindest bereichsweise ineinander angeordneten, ringförmigen, gegeneinander verdrehbaren Elementen zum Anschluss an gegeneinander verdrehbaren Teilen der Windkraftanlage, wobei zwei gegeneinander verdrehbare Anschlusselemente durch einen Spalt voneinander getrennt sind und einander in radialer Richtung ganz oder teilweise überlappen, wobei ferner im Bereich eines Spaltes in radial überlappenden Bereichen der ringförmigen Anschlusselemente wenigstens zwei Reihen von Wälzkörpern vorgesehen sind, welche jeweils entlang von zwei einander zumindest bereichsweise in radialer Richtung überlappenden Laufbahnen abrollen, zeichnet sich dadurch aus, dass mindestens ein Blattlager wenigstens drei ringförmige, gegeneinander verdrehbare Anschlusselemente mit je einer ebenen Anschlussfläche zum Anschluss an der Nabe und an dem Rotorblatt aufweist, wobei die drei ringförmigen Anschlusselemente radial ineinander angeordnet sind und das radial mittlere Anschlusselement an der Nabe oder dem Rotorblatt angeschlossen ist, während das radial innerste Anschlusselement sowie das radial äußerste Anschlusselement an dem jeweils anderen Element angeschlossen sind. Das Windrad einer derartigen Windkraftanlage erhält durch die erfindungsgemäße Lagerung der Rotorblätter eine höhere Stabilität, was sich u.a. auch positiv auf die erreichbare Betriebsdauer auswirkt.

Das Blattlager einer derartigen Windkraftanlage kann eines oder mehrere der zuvor beschriebenen Wälzlager-Merkmale aufweisen. Die Vorteile einer mit den oben erläuterten Merkmalen versehenen Rotorblattlagerung übertragen sich nicht nur auf das Windrad, sondern verbessern dadurch auch die Gesamteigenschaften einer derartigen Windkraftanlage.

Erfindungsgemäß kann an der Nabe oder an dem Rotorblatt ein querschnittlich etwa gabelförmiger Anschlussbereich vorgesehen sein mit zwei konzentrisch ineinander angeordneten Schürzen zum Anschluss an dem radial innersten und dem radial äußersten Anschlusselement des Blattlagers. An den vorzugsweise miteinander fluchtenden, freien Stirnseiten dieser beiden Schürzen kann sodann das radial innerste Anschlusselement einerseits sowie das radial äußerste Anschlusselement andererseits angeschlossen werden; der Abstand zwischen den beiden Schürzen korrespondiert dabei etwa mit der Breite des mittleren Anschlusselements.

Durch Inspektionsbohrungen in dem gabelförmigen Anschlussbereich, können die Befestigungsschrauben, -bolzen od. dgl. Befestigungsmittel hindurch zugänglich sein. Dadurch ist es möglich, das Rotorblatt an dem Rotorblattlager zu verankern, nachdem dieses an der Rotornabe befestigt ist. Auch ist eine nachträgliche beliebige Demontage im Bereich jeder Anschlusskonstruktion möglich, ohne die jeweils andere Anschlusskonstruktion zu lösen.

Schließlich entspricht es der Lehre der Erfindung, dass der Abstand zwischen den beiden Schürzen des querschnittlich gabelförmigen Bereichs etwa dem vorzugsweise kleinsten Durchmesser des Kopfs einer Befestigungsschraube, - mutter od. dgl. entspricht und dieses Befestigungsmittel dadurch vor einem versehentlichen Lösen geschützt ist. Damit wird ein mehrkantiges, vorzugsweise als Sechskant ausgestaltetes Befestigungsmittel quasi wie mit einem Maulschlüssel unverdrehbar festgehalten und kann sich daher selbst bei starken Erschütterungen nicht lösen. Vorteilhaft ist dabei, wenn ein Querschnitt durch das betreffende Befestigungsmittel an dem Außenumfang seines außengewindelosen Bereichs - insbesondere seines Kopfs - zwei einander gegenüber liegende, zueinander parallele Seiten aufweist. Dies ist bspw. bei einem regelmäßigen Vieleck mit einer geraden Anzahl von Seiten der Fall.

Weitere Merkmale, Einzelheiten, Vorteile und Wirkungen auf der Basis der Erfindung ergeben sich aus der folgenden Beschreibung einiger bevorzugter Ausführungsformen der Erfindung sowie anhand der Zeichnung. Hierbei zeigt:
Fig. 1 eine erfindungsgemäße Windkraftanlage in der Vorderansicht;
Fig. 2 einen Querschnitt durch eine erste Ausführungsform einer exemplarischen, nicht erfindungsgemäßen Wälzlagerung, eingebaut zwischen der Nabe und einem Rotorblatt der Windkraftanlage nach Fig. 1, teilweise abgebrochen;
Fig. 3 eine der Fig. 2 entsprechende Darstellung einer zweiten exemplarischen, nicht erfindungsgemäßen Ausführungsform;
Fig. 4 eine der Fig. 2 entsprechende Darstellung einer dritten, erfindungsgemäßen Ausführungsform;
Fig. 5 eine der Fig. 2 entsprechende Darstellung einer weiteren Ausführungsform der Erfindung; sowie
Fig. 6 eine der Fig. 2 entsprechende Darstellung einer abermals abgewandelten Ausführungsform der Erfindung.

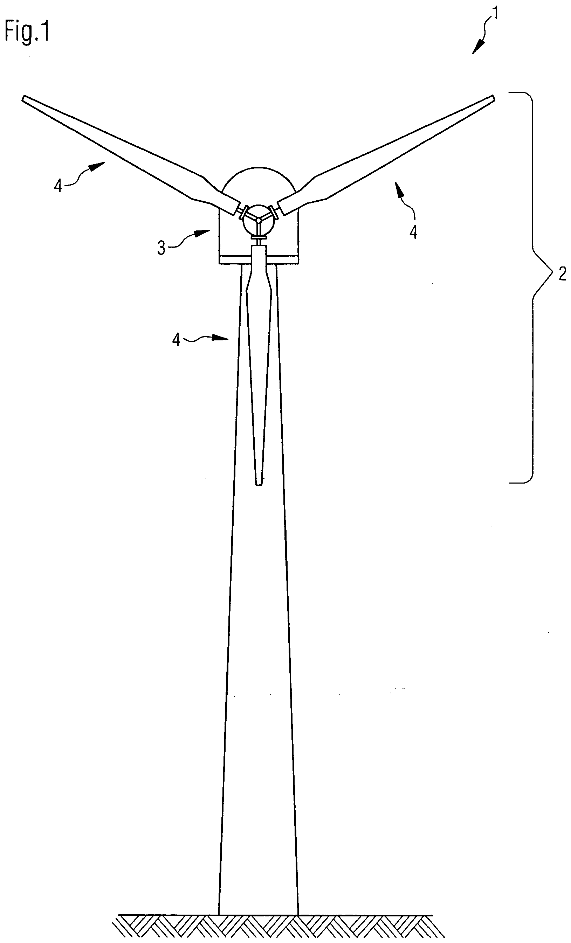

Die Fig. 1 zeigt in einer eher schematischen Ansicht eine Windkraftanlage 1 mit einem Turm, einer Gondel und einem Windrad 2, welches eine um die sog. Rotoroder Hauptachse rotierende Nabe 3 sowie mehrere langgestreckte, von der Nabe 3 etwa radial zur Rotoroder Hauptachse weg strebende Rotorblätter 4 aufweist.

Bevorzugt weist die Rotor- oder Hauptachse etwa in Richtung der Windströmung, was mittels einer Nachregelung der Rotor- oder Hauptachse durch Verschwenken der Gondel um die vertikale Turmachse der Windkraftanlage bewirkt wird.

Damit die Drehzahl des Windrades trotz unterschiedlicher Windstärken möglichst konstant oder zumindest in einem bestimmten Drehzahlbereich gehalten wird, können die Rotorblätter 4 um ihre jeweiligen Längsachsen verdreht werden und dabei je nach Bedarf stärker in den Wind gestellt werden oder aus dem Wind genommen werden. Dies leisten sog. Blattlager 5, welche je ein Rotorblatt 4 mit der Nabe 3 verbinden.

Zwecks aktiver Steuerung der Rotorblattstellung kann im Bereich eines derartigen Blattlagers 5 ein umlaufender Zahnkranz vorgesehen sein, womit bspw. ein motorisch angetriebenes Ritzel kämmt.

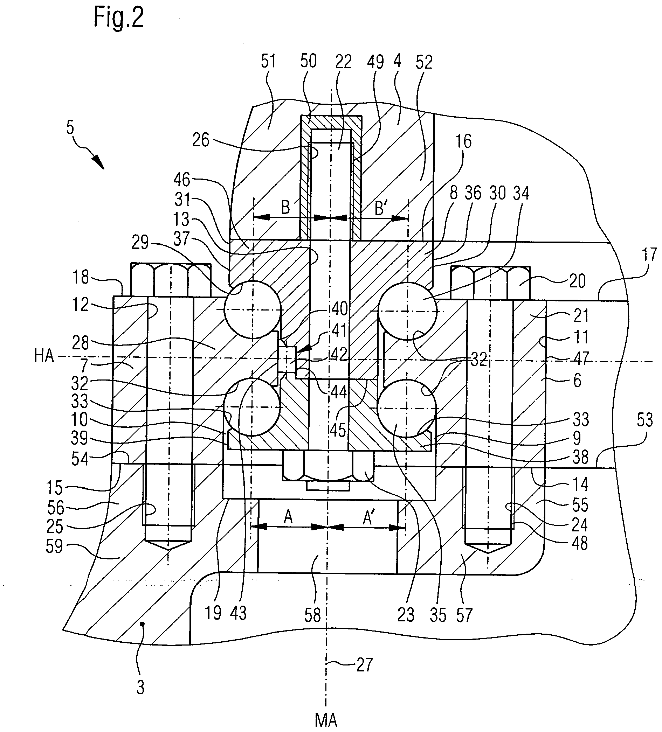

In Fig. 2 ist ein abgebrochener Querschnitt durch ein Blattlager 5 zu sehen, samt der daran angeschlossenen Bereiche der Nabe 3 und des Rotorblattes 4.

Während in diesem Fall die Rotor- oder Hauptachse etwa horizontal unterhalb des dargestellten Ausschnittes entlangläuft, befindet sich die Drehachse des Blattlagers 5 - und also die dazu etwa koaxiale Längsachse des Rotorblattes 4 - rechts jenseits des Randes des dargestellten Ausschnittes und verläuft dort von oben nach unten, also radial und lotrecht zu der Rotor- oder Hauptachse. Während der in Fig. 2 geschnittene Bereich des Blattlagers 5 eine Breite in der Größenordnung etwa zwischen 10 cm und 30 cm aufweist, liegt der Durchmesser des Blattlagers 5 bei großen Windkraftanlagen typischerweise etwa zwischen 0,5 m und 10 m, vorzugsweise zwischen 1 m und 8 m, insbesondere zwischen 2 m und 5 m, und befindet sich daher weit außerhalb des auf dem Zeichnungsblatt darstellbaren Bereichs. Aufgrund seiner Größe wird ein Blattlager 5 üblicherweise auch als Großwälzlager bezeichnet.

Das Blattlager 5 weist insgesamt drei jeweils ringförmige Anschlusselemente auf, deren Ringachsen allesamt koaxial zu der Rotorblattachse verlaufen: Zwischen einem radial inneren Anschlusselement 6 und einem radial äußeren Anschlusselement 7 befindet sich ein mittleres Anschlusselement 8. Da die jeweils benachbarten Anschlusselemente - also das radial innere Anschlusselemente 6 und das mittlere Anschlusselement 8 einerseits sowie das mittlere Anschlusselement 8 und das radial äußere Anschlusselement 7 andererseits - durch je einen Spalt 9, 10 voneinander getrennt sind, lassen sich alle drei Anschlusselemente 6-8 in nicht eingebautem Zustand beliebig gegeneinander verdrehen.

Dies trifft jedoch im eingebauten Zustand nicht mehr zu. Denn wie man in Fig. 2 erkennen kann, werden das radial innere Anschlusselement 6 und das radial äußerste Anschlusselement 7 an der selben Anschlusskonstruktion befestigt, nämlich in dem dargestellten Beispiel an der Nabe 3 des Windrades 2. Im eingebauten Zustand können sich also diese beiden Anschlusselemente 6, 7 nicht mehr gegeneinander verdrehen, sondern jeweils nur noch gegenüber dem jeweils mittleren Anschlusselement 8, welches mit dem Rotorblatt 4 verbunden ist.

Der Befestigung der einzelnen Anschlusselemente 6-8 dienen jeweils kranzförmig über den betreffenden Ring verteilt angeordnete, zur Drehachse des Blattlagers 5 parallele Bohrungen 11-13. Diese münden jeweils an einer Anschlussfläche 14-16 des betreffenden Anschlusselements 6-8, woran ein ebener Flächenbereich im Bereich des Mantels der Nabe 3 oder am rückwärtigen Ende des Rotorblattes 4 bündig bzw. flächig anliegt.

Da es sich in dem dargestellten Beispiel jeweils um Durchgangsbohrungen 11-13, bevorzugt ohne Innengewinde, handelt, münden diese ebenfalls an der jeweils gegenüber liegenden Stirnfläche 17-19 des betreffenden Anschlusselements 6-8. Dort finden die Köpfe 20 von durch diese Öffnungen 11-13 gesteckten Schrauben 21 oder auf dort hindurchgesteckte Bolzen 22 aufgeschraubte Muttern 23 od. dgl. Gewindeelemente genügend Platz zur Anlage. Sofern diese Schrauben 21 oder (Steh- bzw. Gewinde-) Bolzen 22 in mit den jeweiligen Bohrungen 11-13 fluchtende Bohrungen 24-26 der Nabe 3 oder des Rotorblattes 4 eingeschraubt und diese oder darauf geschraubte Muttern 23 festgezogen sind, werden die betreffenden Anschlussflächen 14-16 reibschlüssig gegen die anliegende Fläche der Nabe 3 oder des Rotorblattes 4 gepresst.

Die Bohrung 13 in dem mittleren Anschlusselement 8 liegt etwa mittig zwischen den beiden Spalten 9, 10. Wie man der Fig. 1 weiter entnehmen kann, ist der dargestellte Querschnitt des Blattlagers 5 insgesamt im Wesentlichen symmetrisch zu der Längsachse 27 der Bohrung 13, die deshalb im Weiteren auch als Mittelachse MA bezeichnet werden soll. Alle kugelförmigen Wälzkörper 34 zur Übertragung von Axialkräften haben jeweils gleiche radiale Abstände zu dieser Mittelachse MA.

Die innere Struktur des Blattlagers 5 weist jedoch noch eine weitere Symmetrie auf, und zwar bezüglich einer horizontalen Hauptebene HA, die von der Längsachse 27 der Bohrung 13 und von der Mittelachse MA lotrecht durchsetzt wird und in Fig. 2 ebenfalls eingezeichnet ist. Alle kugelförmigen Wälzkörper 34 zur Übertragung von Axialkräften haben jeweils gleiche axiale Abstände zu dieser Hauptebene HA.

Infolge der doppelten Symmetrie der Wälzkörper 34 liegen deren Mittelpunkte in der Querschnittsdarstellung nach Fig. 2 an den Ecken eines gedachten Rechtecks oder gar Quadrates.

Bei der Ausführungsform nach Fig. 2 sind der radial innerste Ring 6 und der radial äußerste Ring 7 jeweils als Nasenringe ausgebildet mit je einem im Fachjargon als Nase 28 bezeichneten, rundum laufenden Bund, welcher in Richtung zu dem jeweiligen Spalt 9, 10 bzw. dem mittleren Anschlusselement 8 vorspringt. Die Querschnitte dieser beiden Nasen 28 sind in dem dargestellten Beispiel symmetrisch zueinander bezüglich der Symmetrieachse 27.

Diese beiden Nasen 28 werden jeweils an drei Seiten umgriffen von dem mittleren Anschlusselement 8, welches zu diesem Zweck mit je einer rundum laufenden Nut 29 an seinen beiden gewölbten, den Spalten 9, 10 zugewandten Mantelflächen 30, 31 versehen ist. Diese beiden Nuten 29 sind in dem dargestellten Beispiel symmetrisch zueinander bezüglich der Symmetrieachse 27.

Wie Fig. 2 weiter erkennen lässt, überlappen die Flanken einer Nase 28 und der diese umgreifenden Nut 29 einander in radialer Richtung. Die jeweils überlappenden Bereiche dienen als Laufbahnen 32, 33 für je eine Reihe von Wälzkörpern 34, 35. Damit entlang dieser Laufbahnen 32, 33 jeweils Wälzkörper 34, 35 spielfrei abrollen können, entspricht der maximale, axiale Abstand zwischen jeweils zwei dem selben Wälzkörper 34, 35 zugeordneten Laufbahnen 32, 33 gerade jeweils dem Durchmesser des dortigen Wälzkörpers 34, 35. Dies bedeutet andererseits, dass der maximale, axiale Abstand a zwischen den einander zugewandten Flanken 32 einer Nut 29 der Summe aus der minimalen axialen Erstreckung e der Nase 28 zuzüglich dem doppelten Durchmesser d eines Wälzkörpers 34, 35 entspricht: a = e + 2 ^{∗} d, im Falle unterschiedlich großer Wälzkörper 34, 35 mit Durchmesser d₁, d₂ gilt: a = e + d₁ + d₂.

Bei der Ausführungsform nach Fig. 2 haben die Wälzkörper 34, 35 jeweils eine kugelförmige Gestalt. Dies bedeutet, dass die Querschnitte der Laufbahnen 32, 33 jeweils konkav gewölbt sind, insbesondere entlang einem Kreisbogen. Diese gewölbten Laufbahnenbereiche sollen auch als Schmiegebereich bezeichnet werden, da sie nahezu den selben Durchmesser aufweisen wie die kugelförmigen Wälzkörper 34, 35 und sich demzufolge deren Oberfläche anschmiegen. Wie man aus Fig. 2 weiter entnehmen kann, erstreckt sich der Querschnitt durch diese Laufbahn- oder Schmiegebereiche 32, 33 jeweils entlang eines Kreisbogens mit einem Zentrumswinkel α₁, α₂ von 90° oder mehr, jedoch weniger als 180°: 90° < α₁ < 180°, 90° ≤ α₂ < 180°, bevorzugt gilt: α₁ = α₂ = α.

Wie man sieht, streben die Flanken einer Nase 28 und damit die dortigen Laufbahnen 32, 33 zum freien Ende der Nase 28 hin auseinander, und zwar vorzugsweise symmetrisch zueinander bezüglich einer etwa mittigen Hauptebene des Blattlagers 5.

Ferner konvergieren die Flanken einer Nut 29 und damit die dortigen Laufbahnen 32, 33 im Bereich des kantenförmigen Übergangs von der Nut 29 zu den jeweils angrenzenden, gewölbten Abschnitten 36, 37; 38, 39 des mittleren Anschlusselements 8 in axialer Richtung wieder zueinander, und zwar vorzugsweise symmetrisch bezüglich einer etwa mittigen Hauptebene des Blattlagers 5.

Vorzugsweise liegen die Abschnitte 36, 38 oberhalb der Nut 29 jeweils in einer Flucht mit dem betreffenden Abschnitt 37, 39 unterhalb der Nut 29, und demzufolge ist die Stirnfläche 19 nicht nur parallel, sondern auch etwa deckungsgleich mit der Anschlussfläche 16 des mittleren Anschlusselements 8.

Wie Fig. 2 weiter erkennen lässt, gibt es in wenigstens einem Spalt 9, 10 - vorzugsweise im Bereich der freien Stirnseite 40 wenigstens der dortigen Nase 28 - eine weitere Lagerung 41, insbesondere eine fünfte Reihe von Wälzkörpern 42. Diese rollen ebenfalls entlang von zwei Laufbahnen 43, 44 ab, welche sich jedoch nicht in radial überlappenden Bereichen der betreffenden Anschlusselemente 6-8 befinden, sondern den betreffenden Spalt 9, 10 in radialer Richtung überbrücken. Dementsprechend sind die Rotationsachsen dieser Wälzkörper 42 etwa parallel zu der Drehachse des Blattlagers 5, während die Tragwinkel etwa 0° sind entsprechend einer überwiegend oder rein radialen Kraftübertragung. In der dargestellten Ausführungsform handelt es sich um eine Wälzlagerung mit zylinder- oder rollenförmigen Wälzkörpern 42 mit einem kleineren Durchmesser im Verhältnis zu den kugelförmigen Wälzkörpern 34, 35. Dies ist jedoch nicht zwingend. Vielmehr könnte der Durchmesser auch anders gewählt werden, und/oder anstelle von Rollen 42 könnten für das Radiallager 41 auch kugel-, nadel-, kegel- oder tonnenförmige Wälzkörper verwendet werden, oder ein Gleitlager oder sonstiges Lager. Auch kann wenigstens ein solches Radiallager 41 in dem radial inneren Spalt 9 oder in dem radial äußeren Spalt 10 angeordnet sein oder in beiden. Zur axialen Führung rollenförmiger Wälzkörper 42 kann wenigstens eine Laufbahn 43, 44 als nutförmige Vertiefung in dem betreffenden Anschlusselement 6-8 ausgebildet sein.

Wie Fig. 2 weiter erkennen lässt, haben die Wälzkörperreihen 34, 35 einer gemeinsamen Ebene jeweils gleiche radiale Mittelpunktsabstände A, A', B, B' zu einer durch die Mittelachsen 27 der Befestigungsbohrungen 13 aufgespannten Zylindermantelfläche: A = A'; B = B'. Besonders bevorzugt wird eine Anordnung, wobei die Mittelpunkte der Wälzkörper 34, 35 alle vier Wälzkörperreihen gleiche radiale Abstände zu besagter, virtueller Zylindermantelfläche aufweisen: A = A' = B = B'.

Bevorzugt sind die Laufbahnen 32, 33, 43, 44 eines Anschlusselements 6-8 zusammen mit den betreffenden Bohrungen 11-13 durch Bearbeitung oder Formgebung des selben, gemeinsamen Grundkörpers gebildet.

Da die beiden Nasen 28 des innersten und des äußersten Anschlusselements 6, 7 von den Nuten 29 des mittleren Anschlusselements 8 an drei Seiten umgriffen werden, ist ein Zusammenbau des Blattlagers 5 nur möglich, indem das mittlere Anschlusselement 8 im Bereich der Nut 29 entlang einer horizontalen Fläche 45 unterteilt ist in einen oberen Ring 46 und einen unteren Ring 47, welche von beiden axialen Richtungen gleichzeitig über die Nasen 28 des radial innersten und des radial innersten Anschlusselements 6, 7 gestülpt und erst dann miteinander verbunden werden, insbesondere verschraubt.

Wegen der Durchgangsbohrungen 11-13 können die damit fluchtenden Bohrungen 24-26 als Sacklochbohrungen mit Innengewinde 48, 49 ausgebildet sein, worin die Schrauben 21 oder Bolzen 22 eingeschraubt werden. Dabei kann ein solches Innengewinde 48, 49 je nach Beschaffenheit des für die Nabe 3 und/oder die Rotorblätter 4 verwendeten Materials entweder in das betreffende Material eingeschnitten sein, wie in die Nabe 3 aus Fig. 2, oder in eine Hülse 50 oder in einen sonstigen Körper, welche(r) wiederum selbst in die Anschlusskonstruktion eingelassen ist, bspw. eingegossen, eingeklebt und/oder anderweitig befestigt. Bevorzugt entspricht die radiale Breite des mittleren Anschlusselements 8 bzw. die radiale Breite von dessen Anschlussfläche 16 etwa der radialen Stärke des Rotorblattmantels 51 an dessen rückwärtigem Ende 52, so dass dieser stumpf auf die Anschlussfläche 16 aufgesetzt und dort festgelegt werden kann.

Eine Anschlusskonstruktion - im dargestellten Beispiel die Nabe 3 - verfügt über zwei konzentrische Befestigungsflächen 53, 54, welche sich jeweils an der freien Stirnseite je einer von zwei zueinander konzentrischen Schürzen 55, 56 befinden. Diese beiden Schürzen 55, 56 sind an ihrer Basis durch einen radialen Steg 57 miteinander verbunden zu einer Anordnung mit einem insgesamt etwa U-förmigen Querschnitt. Um einen Zugang zu den Bolzen 22 oder den jeweils darauf geschraubten Muttern 23 oder zu stattdessen verwandten Schrauben zu erhalten, sind in dem Steg 57 eine der Anzahl von Bohrungen 13 in dem mittleren Anschlusselement 8 entsprechende Anzahl von Zugangsbohrungen 58 vorgesehen, welche bevorzugt etwas größer sind als der maximale Durchmesser der Muttern 23, Schraubenköpfe 20 od. dgl. Befestigungsmittel. Der Mantel 59 der Nabe 3 setzt etwa in einer Flucht mit der radial äußeren Schürze 56 an der Unterseite des Stegs 57 an.

Natürlich kann die Anordnung auch genau umgekehrt gewählt werden, d.h., an dem Rotorblatt 4 befinden sich zwei zueinander konzentrische Schürzen mit je einer Anschlussfläche für das innerste und das äußerste Anschlusselement 6, 7, und an der Nabe gibt es dann nur eine Anschlussfläche für das mittlere Anschlusselement 8.

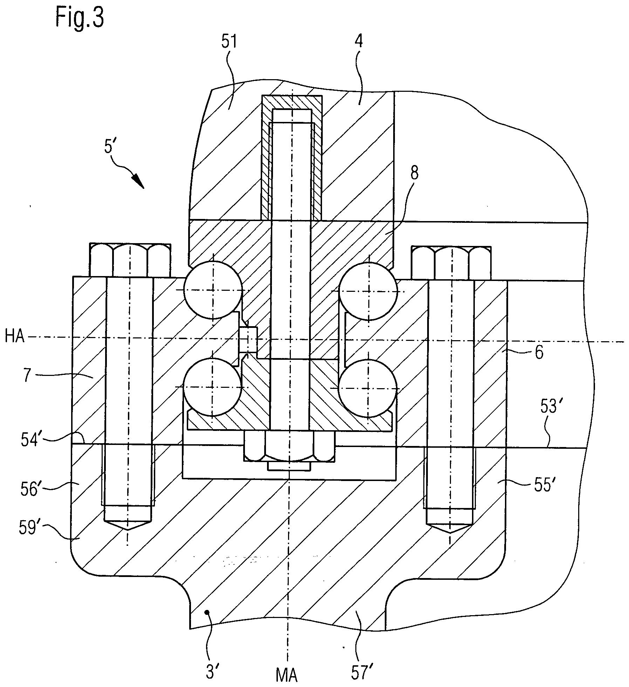

In Fig. 3 ist eine abweichende Anordnung wiedergegeben. Dabei ist das Blattlager 5' jedoch baugleich mit dem zuvor beschriebenen, und auch der Anschluss an dem Rotorblatt 4 ist identisch mit der zuvor beschriebenen Technik; lediglich die Anschlusskonstruktion an der Nabe 3' weicht in diesem Fall ab:
Wie bei der zuvor beschriebenen Ausführungsform weist die Nabe 3' in ihrem Anschlussbereich zwei Schürzen 55', 56' auf, mit einem Abstand, welcher etwa der maximalen radialen Breite des mittleren Anschlusselements 8 entspricht. Diese Schürzen 55', 56' sind auch durch einen Steg 57' miteinander verbunden. Ferner setzt an der den Schürzen 55', 56' abgewandten Unterseite des Stegs 57' der Nabenmantel 59' an, jedoch nicht in einer Flucht mit einer der beiden Schürzen 55', 56', sondern radial etwa genau dazwischen. Dies ist u. a. auch deshalb möglich, weil Zugangsbohrungen 58 bei dieser Ausführungsform gänzlich fehlen.

Die bei dieser Ausführungsform fehlenden Zugangsbohrungen 58 bedingen einen besonderen Montageablauf: Zunächst wird das mittlere Anschlusselement 8 des Blattlagers 5' an dem Rotorblatt 4 festgeschraubt, und erst dann können die anderen beiden Anschlusselemente 6, 7 an der Nabe 3' befestigt werden. Die Demontage erfolgt in genau umgekehrter Reihenfolge.

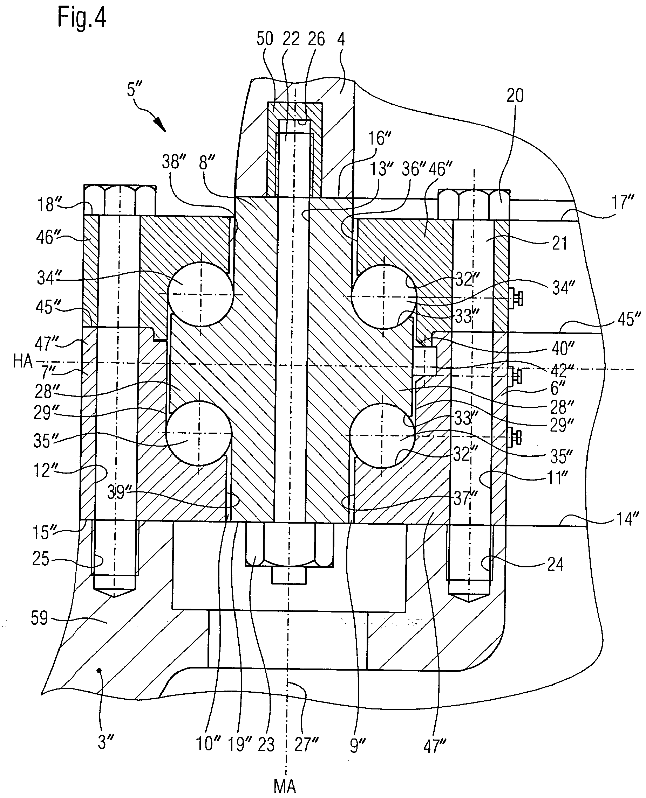

Bei der Ausführungsform nach Fig. 4 ist sowohl das Rotorblatt 4 als auch die Nabe 3 baugleich zu den entsprechenden Elementen aus Fig. 2. Hier hat jedoch das Blattlager 5" selbst eine andere Struktur:
Der Grundsatz von drei gegeneinander verdrehbaren Anschlusselementen 6"-8" mit je einem Kranz von Durchgangsbohrungen 11"-13", welche jeweils durch Spalte 9", 10" voneinander getrennt sind, ist auch hier beibehalten.

Der gravierendste Unterschied zu dem vorangehend beschriebenen Blattlager 5 ist, dass hier die Nasen 28" nicht an dem radial innersten und dem radial äußersten Anschlusselement 6", 7" angeordnet sind, sondern an dem mittleren Anschlusselement 8", während die jene Nasen 28" an jeweils drei Seiten umgreifenden Anschlusselemente 6", 7" jeweils an ihrer, dem betreffenden Spalt 9", 10" zugewandten Mantelfläche je eine rundumlaufende Nut 29" aufweisen.

Wie Fig. 4 weiter erkennen lässt, überlappen die Flanken einer Nase 28" und der diese umgreifenden Nut 29" einander in radialer Richtung. Die jeweils überlappenden Bereiche dienen als Laufbahnen 32", 33" für je eine Reihe von Wälzkörpern 34", 35". Damit entlang dieser Laufbahnen 32", 33" jeweils Wälzkörper 34", 35" spielfrei abrollen können, entspricht der maximale, axiale Abstand zwischen jeweils zwei dem selben Wälzkörper 34", 35" zugeordneten Laufbahnen 32", 33" gerade jeweils dem Durchmesser des dortigen Wälzkörpers 34", 35". Dies bedeutet andererseits, dass der maximale, axiale Abstand a zwischen den einander zugewandten Flanken 32" einer Nut 29" der Summe aus der minimalen axialen Erstreckung e der Nase 28" zuzüglich dem doppelten Durchmesser d eines Wälzkörpers 34", 35" entspricht: a = e + 2 * d, im Falle unterschiedlich großer Wälzkörper 34", 35" mit Durchmesser d₁, d₂ gilt: a = e + d₁ + d₂.

Bei der Ausführungsform nach Fig. 4 haben die Wälzkörper 34", 35" jeweils eine kugelförmige Gestalt. Dies bedeutet, dass die Querschnitte der Laufbahnen 32", 33" jeweils konkav gewölbt sind, insbesondere entlang eines Kreisbogens. Diese gewölbten Laufbahnbereiche sollen auch als Schmiegebereiche bezeichnet werden, da sie nahezu den selben Durchmesser aufweisen wie die kugelförmigen Wälzkörper 34", 35" und sich demzufolge deren Oberfläche anschmiegen. Wie Fig. 4 weiter entnommen werden kann, erstreckt sich der Querschnitt durch diese Laufbahn- oder Schmiegebereiche 32", 33" jeweils entlang eines Kreisbogens mit einem Zentrumswinkel α₁, α₂ von 90° oder mehr, jedoch weniger als 180°: 90° ≤ α₁ < 180°, 90° ≤ α₂ < 180°, bevorzugt gilt: α₁ = α₂ = α.

Wie man sieht, streben die Flanken einer Nase 28" und damit die dortigen Laufbahnen 32", 33" zum freien Ende der Nase 28" hin auseinander, und zwar vorzugsweise symmetrisch zueinander bezüglich einer etwa mittigen Hauptebene des Blattlagers 5".

Ferner können die Flanken einer Nut 29" und damit die dortigen Laufbahnen 32", 33" im Bereich des kantenförmigen Übergangs von der Nut 29" zu den jeweils angrenzenden, gewölbten Abschnitten 36", 37"; 38", 39" des radial innersten und des radial äußersten Anschlusselements 6", 7" in axialer Richtung wieder zueinander konvergieren, und zwar vorzugsweise symmetrisch bezüglich einer etwa mittigen Hauptebene des Blattlagers 5".

Vorzugsweise liegen die Abschnitte 36", 38" oberhalb einer Nut 29" jeweils in einer Flucht mit dem betreffenden Abschnitt 37", 39" unterhalb der betreffenden Nut 29", und demzufolge sind vorzugsweise die Stirnflächen 17"-19" der Anschlusselemente 6"-8" nicht nur parallel, sondern auch etwa deckungsgleich mit der betreffenden Anschlussfläche 14"-16" des Anschlusselements 6"-8".

Wie Fig. 4 weiter erkennen lässt, gibt es in wenigstens einem Spalt 9", 10" - vorzugsweise im Bereich der freien Stirnseite 40" der dortigen Nase 28" - eine weitere Lagerung 41", insbesondere eine fünfte Reihe von Wälzkörpern 42". Diese rollen ebenfalls entlang von zwei Laufbahnen 43", 44" ab, welche sich jedoch nicht in radial überlappenden Bereichen der betreffenden Anschlusselemente 6"-8" befinden, sondern den betreffenden Spalt 9", 10" in radialer Richtung überbrücken. Dementsprechend sind die Rotationsachsen dieser Wälzkörper 42" etwa parallel zu der Drehachse des Blattlagers 5", während die Tragwinkel etwa 0° sind entsprechend einer überwiegend oder rein radialen Kraftübertragung. In der dargestellten Ausführungsform handelt es sich um eine Wälzlagerung mit zylinder- oder rollenförmigen Wälzkörpern 42" mit einem kleineren Durchmesser im Verhältnis zu den kugelförmigen Wälzkörpern 34", 35". Dies ist jedoch nicht zwingend. Vielmehr könnte der Durchmesser auch anders gewählt werden, und/oder anstelle von Rollen 42" könnten für das Radiallager 41" auch kugel-, nadel-, kegel- oder tonnenförmige Wälzkörper verwendet werden, oder ein Gleitlager oder sonstiges Lager. Auch kann wenigstens ein solches Radiallager 41" in dem radial inneren Spalt 9" oder in dem radial äußeren Spalt 10" angeordnet sein oder in beiden. Zur axialen Führung rollenförmiger Wälzkörper 42" kann wenigstens eine Laufbahn 43", 44" als nutförmige Vertiefung in dem betreffenden Anschlusselement 6"-8" ausgebildet sein.

Bevorzugt sind die Laufbahnen 32", 33", 43", 44" eines Anschlusselements 6"-8" zusammen mit den betreffenden Bohrungen 11"-13" durch Bearbeitung oder Formgebung des selben, gemeinsamen Grundkörpers gebildet.

Da die beiden Nasen 28,, des mittleren Anschlusselements 8" von den Nuten 29" der beiden anderen Anschlusselemente 6"-8" an drei Seiten umgriffen werden, ist ein Zusammenbau des Blattlagers 5" nur möglich, indem sowohl das radial innerste als auch das radial äußerste Anschlusselement 6", 7" im Bereich der jeweiligen Nut 29" entlang einer horizontalen Fläche 45" unterteilt ist in je einen oberen Ring 46" und einen unteren Ring 47", welche von beiden axialen Richtungen gleichzeitig über die Nasen 28" des mittleren Anschlusselements 8" gestülpt und erst dann miteinander verbunden werden, insbesondere verschraubt.

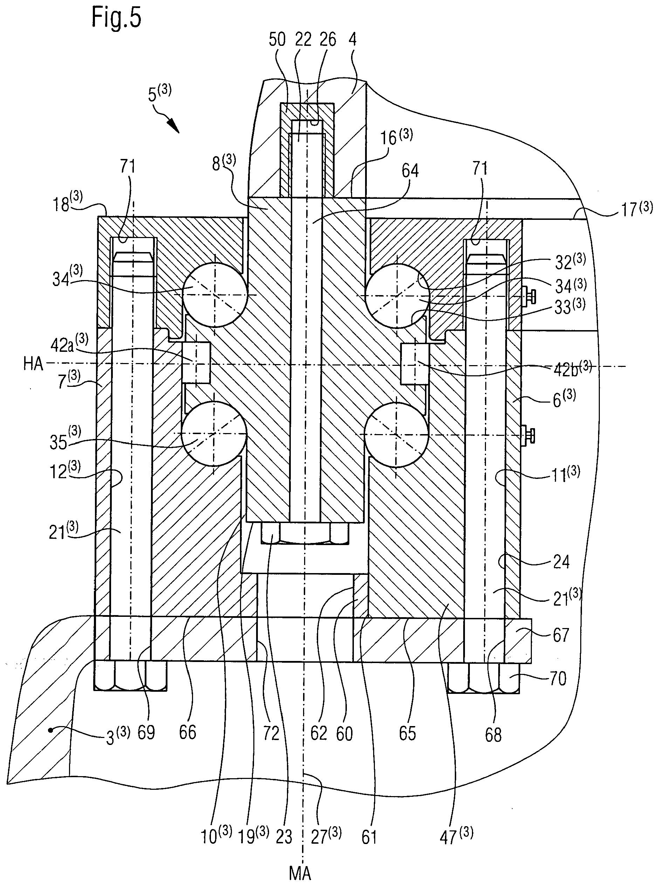

Bei der Windkraftanlage 1⁽³⁾ nach Fig. 5 unterscheidet sich das Windrad 2⁽³⁾ von der zuvor beschriebenen Ausführungsform 1", 2" nur in einigen Details; die Grundstruktur ist dagegen nahezu identisch.

Ein erster Unterschied liegt darin, dass bei der Ausführungsform 1⁽³⁾, 2⁽³⁾ anstelle einer einzigen Radial-Lagerung 41, 42; 42" zwei Radial-Lagerungen 42a⁽³⁾, 42b⁽³⁾ vorgesehen sind, und zwar einmal in dem Spalt 9⁽³⁾ zwischen dem radial innersten Anschlusselement 6⁽³⁾ und dem mittleren Anschlusselement 8⁽³⁾ sowie einmal in dem Spalt 10⁽³⁾ zwischen dem mittleren Anschlusselement 8⁽³⁾ und dem radial äußersten Anschlusselement 7⁽³⁾. Dabei können die Wälzkörper der Radial-Lagerungen 42a⁽³⁾, 42b⁽³⁾ in je einer muldenförmigen Vertiefung eines Anschlusselements 6⁽³⁾, 7⁽³⁾, 8⁽³⁾, vorzugsweise des mittleren Anschlusselements 8⁽³⁾, aufgenommen sein. Bevorzugt befinden sich die Wälzkörper der Radial-Lagerungen 42a⁽³⁾, 42b⁽³⁾ auf gleicher Höhe.

Während sich das radial mittlere Anschlusselement 8⁽³⁾ von dem zuvor beschriebenen, mittleren Anschlusselement 8" kaum unterscheidet, gibt es bei den beiden anderen Anschlusselementen 6⁽³⁾, 7⁽³⁾ mehrere Abweichungen.

Im Gegensatz zu den Anschlusselementen 6", 7" stehen die Anschlusselemente 6⁽³⁾, 7⁽³⁾ in direktem Kontakt. Dieser Kontaktbereich befindet sich an einer Stirnseite des mittleren Anschlusselements 8⁽³⁾, vorzugsweise in axialer Verlängerung eines Spaltes 9⁽³⁾, 10⁽³⁾, insbesondere des radial inneren Spaltes 9⁽³⁾. Hier liegt eine zylindermantelförmige Außenfläche des radial innersten Anschlusselements 6⁽³⁾ an einer hohlzylindrischen Fläche innerhalb des radial äußersten Anschlusselements 7⁽³⁾ an. Dieser flächige Kontakt bewirkt eine Zentrierung der beiden Anschlusselemente 6⁽³⁾, 7⁽³⁾.

Zur Ausbildung eines direkten Kontakts sind die beiden äußeren Anschlusselemente 6⁽³⁾, 7⁽³⁾ gegenüber der Ausführungsform nach Fig. 3 in axialer Richtung deutlich höher ausgebildet als das mittlere Anschlusselement 8⁽³⁾. Im Bereich des Überstandes in axialer Richtung weist mindestens eines der beiden Anschlusselemente 6⁽³⁾, 7⁽³⁾ einen rundum laufenden Bund 60 auf. Dieser Bund 60 reicht bis zu dem jeweils anderen Anschlusselement 6⁽³⁾, 7⁽³⁾ heran und bildet dort einen Kontakt aus entlang einer Kontaktfläche 61.

Der Bund 60 ist mit Durchbrechungen 62 versehen, deren Durchmesser größer ist als der maximale Durchmesser der Mutter 23 oder des Kopfes 63 einer Schraube 64, welche durch das mittlere Anschlusselement 8⁽³⁾ hindurch in ein Rotorblatt 4 eingeschraubt wird. Die Anzahl der Durchbrechungen 62 entspricht der Anzahl der Schraubhülsen 50 in dem Rotorblatt 4, und ihre Verteilung über den Umfang ist identisch mit der Verteilung der Schraubhülsen 50 über den Umfang der Rotorblatt-Stirnseite. Aufgrund des größeren Durchmessers der Durchbrechungen im Vergleich zu den Muttern 23 oder Schraubenköpfen 63 ist es möglich, einen Steckschlüssel durch die Öffnungen bzw. Durchbrechungen 62 hindurch auf ein Schraubelement, also eine Mutter 23 oder einen Schraubenkopf 63, aufzustecken und dieses auf jenem Weg festzuziehen.

Bevorzugt liegen die der Nabe 3⁽³⁾ zugewandten Enden der beiden äußeren Anschlusselemente 6⁽³⁾,7⁽³⁾, welche jeweils als Anschlussfläche 65, 66 dienen, in einer gemeinsamen Ebene, die von der Drehachse der Lagerung lotrecht durchsetzt ist. Daher kann in diesem Fall der damit zu verschraubende Bereich 67 der Nabe 3⁽³⁾ ebenfalls eben sowie durchgehend, d.h. einteilig, ausgebildet sein und mit den beiden Anschlussflächen 65, 66 verschraubt sein. Dabei werden kranzförmig verteilt angeordnete Bohrungen 68, 69 in dem Bereich 67 der Nabe 3⁽³⁾ von den Schrauben 21⁽³⁾ durchgriffen. Diese werden daher nicht von der dem Rotorblatt 4 zugewandten Lagerstirnseite her eingeschraubt, sondern von der nabenseitigen Stirnseite her, derart, dass die Unterseiten der Schraubenköpfe 70 an der Innenseite des Nabenbereichs 67 anliegen. Die Schraubverbindungen 21⁽³⁾, 70 werden dadurch optimiert, dass die Bohrungen 11⁽³⁾, 12⁽³⁾ die beiden äußeren Anschlusselemente 6⁽³⁾, 7⁽³⁾ nicht vollständig durchsetzen, sondern als Sachlochbohrungen ausgebildet sind. Dabei ist nur der den Boden 71 eines Sacklochs 11⁽³⁾, 12⁽³⁾ aufweisende Bereich der Bohrungen 11⁽³⁾, 12⁽³⁾ mit einem Innengewinde versehen, so dass die Schrauben 21⁽³⁾, 70 sich nur dort verankern. Der angeschraubte Nabenbereich 67 weist mit den Durchbrechungen 62 des Bundes 60 fluchtende Bohrungen 72 auf, wodurch die Muttern 23 oder Schraubenköpfe 63 hindurch zugänglich sind.

Ein Vorteil dieser Anordnung ist, dass alle Schraubverbindungen 20, 23 von innen aus der Nabe 3⁽³⁾ heraus zugänglich sind.

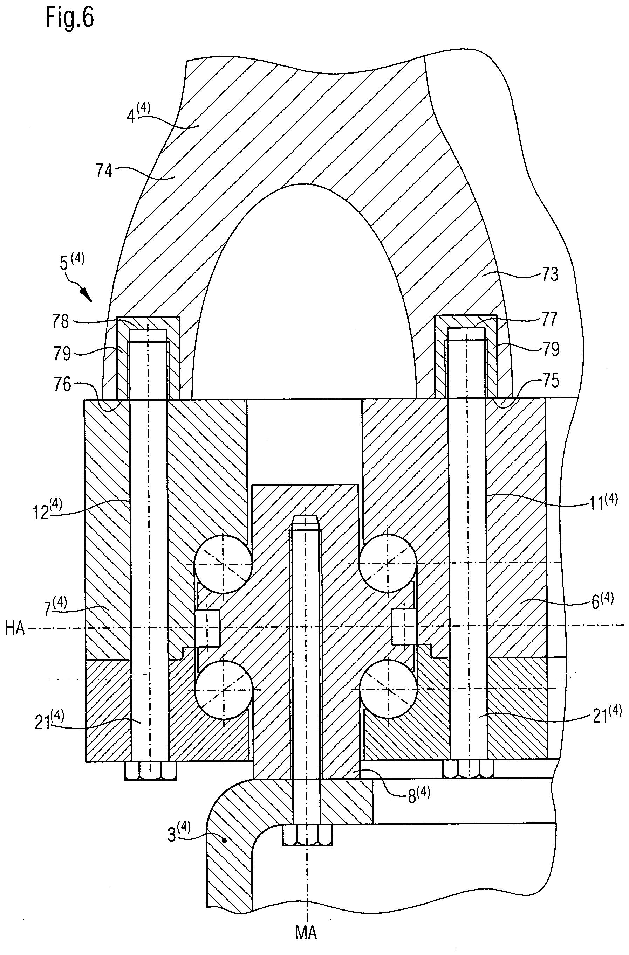

Ähnliches gilt auch für die Ausführungsform einer Windkraftanlage 1⁽⁴⁾ nach Fig. 6, wo sich das Blattlager 5⁽⁴⁾ von der zuvor beschriebenen Ausführungsform 5⁽³⁾ nicht unterscheidet; lediglich der Einbau in eine Windkraftanlage 1⁽⁴⁾ ist geringfügig anders.

Hier sind nämlich die Nabe 3⁽⁴⁾ und das Rotorblatt 4⁽⁴⁾ vertauscht angeschlossen. Dies bedeutet, dass die Nabe 3⁽⁴⁾ an dem mittleren Anschlusselement 8⁽⁴⁾ angeschlossen ist, während das Rotorblatt 4⁽⁴⁾ an den beiden äußeren Anschlusselementen 6⁽⁴⁾, 7⁽⁴⁾ angeschlossen ist. Dies wird dadurch ermöglicht, dass sich das Rotorblatt 4⁽⁴⁾ im Bereich seines rückwärtigen Endes sich in zwei zueinander konzentrische, in radialer Richtung voneinander beabstandete Schürzen 73, 74 aufspaltet, mit je einer ebenen Anschlussfläche 75, 76, in welcher jeweils kranzförmig verteilt angeordnete Sacklochbohrungen 77, 78 mit jeweils wenigstens einer eingesetzten Gewindehülse 79 vorgesehen sind. In diesem Fall sind die damit fluchtenden Bohrungen 11⁽⁴⁾, 12⁽⁴⁾ in den beiden äußeren Anschlusselementen 6⁽⁴⁾, 7⁽⁴⁾ als gewindelose Durchgangsbohrungen ausgebildet, durch welche je eine Schraube zur Befestigung des Rotorblattes 4⁽⁴⁾ hindurchgesteckt werden kann.

Die Erfindung erlaubt verschiedene Abwandlungen. Beispielsweise könnte der Bund 60 entlang der Kontaktfläche 61 mit dem jeweils anderen Anschlusselement 6⁽³⁾, 7⁽³⁾ bzw. 6⁽⁴⁾, 7⁽⁴⁾ punktuell oder flächig miteinander verbunden sein oder werden, um die Stabilität weiter zu erhöhen. Jedoch sollte die gemeinsame Verschraubung beider Anschlusselemente 6, 7 mit einem gemeinsamen Maschinenteil - Nabe 3 oder Rotorblatt 4 - eine solche Maßnahme im Allgemeinen überflüssig machen.

**Bezugszeichenliste**

| | | | |
|---|---|---|---|
| 1 | Windkraftanlage | 26 | Bohrung |
| 2 | Windrad | 27 | Längsachse |
| 3 | Nabe | 28 | Nase |
| 4 | Rotorblatt | 29 | Nut |
| 5 | Blattlager | 30 | Mantelfläche |
| 6 | Anschlusselement | 31 | Mantelfläche |
| 7 | Anschlusselement | 32 | Laufbahn |
| 8 | Anschlusselement | 33 | Laufbahn |
| 9 | Spalt | 34 | Wälzkörper |
| 10 | Spalt | 35 | Wälzkörper |
| 11 | Bohrung | 36 | Abschnitt |
| 12 | Bohrung | 37 | Abschnitt |
| 13 | Bohrung | 38 | Abschnitt |
| 14 | Anschlussfläche | 39 | Abschnitt |
| 15 | Anschlussfläche | 40 | Stirnseite |
| 16 | Anschlussfläche | 41 | Lagerung |
| 17 | Stirnfläche | 42 | Wälzkörper |
| 18 | Stirnfläche | 43 | Laufbahn |
| 19 | Stirnfläche | 44 | Laufbahn |
| 20 | Kopf | 45 | Fläche |
| 21 | Schraube | 46 | oberer Ring |
| 22 | Bolzen | 47 | unterer Ring |
| 23 | Mutter | 48 | Innengewinde |
| 24 | Bohrung | 49 | Innengewinde |
| 25 | Bohrung | 50 | Hülse |
| 51 | Rotorblattmantel | 76 | Anschlussfläche |
| 52 | Ende | 77 | Sacklochbohrung |
| 53 | Befestigungsfläche | 78 | Sacklochbohrung |
| 54 | Befestigungsfläche | 79 | Gewindehülse |
| 55 | Schürze | | |
| 56 | Schürze | | |
| 57 | Steg | | |
| 58 | Zugangsbohrung | | |
| 59 | Mantel | | |
| 60 | Bund | | |
| 61 | Kontaktfläche | | |
| 62 | Durchbrechung | | |
| 63 | Schraubenkopf | | |
| 64 | Schraube | | |
| 65 | Anschlussfläche | | |
| 66 | Anschlussfläche | | |
| 67 | Bereich | | |
| 68 | Bohrung | | |
| 69 | Bohrung | | |
| 70 | Schraubenkopf | | |
| 71 | Boden | | |
| 72 | Bohrung | | |
| 73 | Schürze | | |
| 74 | Schürze | | |
| 75 | Anschlussfläche | | |

## Patentansprüche

1. Wälzlageranordnung (5;5';5";5⁽³⁾;5⁽⁴⁾), vorzugsweise Großwälzlager mit einem Durchmesser von 0,5 m oder mehr, vorzugsweise zur Lagerung von Teilen einer Windkraftanlage (1), insbesondere als Blattlager (5;5';5";5(3);5(4)) einer Windkraftanlage (1), mit wenigstens drei konzentrisch zueinander sowie zumindest bereichsweise ineinander angeordneten, ringförmigen, gegeneinander verdrehbaren Anschluss-Elementen (6-8) mit wenigstens je einer ebenen Anschlussfläche (15-17) zum Anschluss an insgesamt zwei verschiedenen Maschinen- oder Anlagenteilen, wobei jeweils zwei gegeneinander verdrehbare Anschlusselemente (6-8) durch einen Spalt (9,10) voneinander getrennt sind und einander in ihrer radialen Erstreckung zumindest teilweise überlappen, wobei ferner im Bereich eines Spaltes (9,10) in radial überlappenden Bereichen der ringförmigen Anschlusselemente (6-8) wenigstens jeweils zwei Reihen von kugelförmigen Wälzkörpern (34,35) vorgesehen sind, welche jeweils entlang von zwei einander zumindest bereichsweise in radialer Richtung überlappenden Laufbahnen (32,33) abrollen, wobei sich die Mittelpunkte der kugelförmigen Wälzkörper der vier Kugelreihen entlang von vier Kreisbahnen um die Drehachse des Wälzlagers bewegen, deren Durchstoßpunkte durch eine Querschnittsebene des Wälzlagers radial zu dessen Drehachse an den Ecken eines Vierecks liegen, wobei das radial innerste Anschlusselement (6) sowie das radial äußerste Anschlusselement (7) an einem Maschinen- oder Anlagenteil angeschlossen sind und das radial mittlere Anschlusselement (8) an dem jeweils anderen Maschinen- oder Anlagenteil angeschlossen ist, **gekennzeichnet durch**
a) wenigstens eine weitere Reihe von Wälzkörpern (42), deren Laufbahnen sich in radialer Richtung nicht überlappen, wobei
b1) die Wälzkörper (42), deren Laufbahnen sich in radialer Richtung nicht überlappen, sich an der freien Stirnseite (40) wenigstens einer Nase (28) des mittleren Anschlusselements (8) abwälzen und zwischen zwei Reihen von kugelförmigen Wälzkörpern (34,35) angeordnet sind, deren querschnittlich konkav gewölbte Laufbahnen (32,33) sich in radialer Richtung überlappen und bei einer Punktspiegelung an dem Schnittpunkt einer Hauptebene (HA) mit einer zu der Lagerdrehachse parallelen Mittelachse (MA) unter dem Mittelpunktsradius eines Kranzes von Befestigungselementen (13) des mittleren Anschlusselements (8) jeweils punktsymmetrisch sind zu den querschnittlich konkav gewölbten Laufbahnquerschnitten der jeweils diagonal, d.h. axial und radial, versetzten Kugelreihe, oder
b2) die Verbindungslinie zwischen zwei einander diametral gegenüber liegenden Ecken des Vierecks der Mittelpunkts-Kreisbahnen der zwischen einander in radialer Richtung überlappenden Laufbahnen abrollenden Wälzkörper (34,35) an jeder der betreffenden zwei Kugelreihen (34,35) jeweils die dortige Verbindungslinie zwischen den Zentren der querschnittlich konkav gewölbten Schmiegebereiche beider querschnittlich konkav gewölbten Laufbahnquerschnitte einer Kugelreihe (34,35) etwa rechtwinklig schneidet.

2. Wälzlageranordnung (5;5';5";5⁽³⁾;5⁽⁴⁾) nach Anspruch 1, **dadurch gekennzeichnet, dass** das mittlere Anschlusselement (8) in axialer Richtung in wenigstens drei Abschnitte gegliedert ist, nämlich einen ersten, an seine Anschlussfläche (16) angrenzenden Bereich, einen zweiten, an seine gegenüber liegende Stirnseite angrenzenden Bereich sowie einen dritten, dazwischen angeordneten Bereich, der gegenüber den ersten beiden in radialer Richtung gleichermaßen vor- oder zurück springt.

3. Wälzlageranordnung (5;5';5";5⁽³⁾;5⁽⁴⁾) nach Anspruch 1 oder 2, **dadurch gekennzeichnet, dass** die kugelförmigen Wälzkörper (34,35) unterschiedlicher Reihen an einander entsprechenden radialen Positionen gleich groß sind, und/oder dass die kugelförmigen Wälzkörper (34,35) aller vier Reihen gleich groß sind.

4. Wälzlageranordnung (5;5';5";5⁽³⁾;5⁽⁴⁾) nach einem der vorhergehenden Ansprüche, **dadurch gekennzeichnet, dass** in dem mittleren Anschlusselement (8) und/oder in einem oder beiden der jeweils anderen Anschlusselemente (6,7) jeweils kranzförmig verteilt angeordnete Befestigungselemente vorgesehen sind, beispielsweise Befestigungsbohrungen (12,13), vorzugsweise Durchgangsbohrungen mit zu der Lagerdrehachse paralleler Längsachse, insbesondere ohne Innengewinde, wobei vorzugsweise wenigstens zwei, bevorzugt alle vier Kugelreihen jeweils gleiche Abstände (A,A',B,B') zu dem Mittelpunktsradius des Kranzes von Befestigungselementen (13) des mittleren Anschlusselements (8) aufweisen.

5. Wälzlageranordnung (5;5';5";5⁽³⁾;5⁽⁴⁾) nach einem der vorhergehenden Ansprüche, **dadurch gekennzeichnet, dass** die Laufbahnquerschnitte einer Wälzkörperreihe bezüglich einer Hauptebene (HA) des Wälzlagers (5;5';5,,;5⁽³⁾;5⁽⁴⁾) spiegelsymmetrisch sind zu den Laufbahnquerschnitten einer axial versetzten Kugelreihe, und/oder dass die Laufbahnquerschnitte einer Wälzkörperreihe bezüglich einer zur Lagerdrehachse parallelen Mittelachse (27;MA) in der Querschnittsebene spiegelsymmetrisch sind zu den Laufbahnquerschnitten einer radial versetzten Kugelreihe.

6. Wälzlageranordnung (5;5';5";5⁽³⁾;5⁽⁴⁾) nach einem der vorhergehenden Ansprüche, **dadurch gekennzeichnet, dass** die Tragwinkel der zwischen jeweils zwei einander zumindest bereichsweise in radialer Richtung überlappenden Laufbahnen abrollenden, kugelförmigen Wälzkörpern 45° oder mehr betragen, vorzugsweise 50° oder mehr, insbesondere 60° oder mehr, vorzugsweise 90° betragen.

7. Wälzlageranordnung (5;5';5";5⁽³⁾;5⁽⁴⁾) nach einem der vorhergehenden Ansprüche, **gekennzeichnet durch** wenigstens eine weitere Lagerstelle (41), deren Tragwinkel kleiner ist 45°, beispielsweise gleich oder kleiner als 40°, vorzugsweise gleich oder kleiner 30°, insbesondere etwa 0°, wobei diese weitere Lagerstelle (41) vorzugsweise als Wälzlager ausgeführt ist, wobei vorzugsweise die Wälzkörper (42) mit einem Tragwinkel von weniger als 45° zwischen zwei Laufbahnen (43,44) abrollen, welche sich radial angrenzend des radial überlappenden Bereichs der betreffenden Anschlusselemente (6-8) befinden, und/oder wobei die Wälzkörper mit einem Tragwinkel von weniger als 45° rollen- oder zylinderförmig ausgebildet sind mit einer Längsachse, die parallel zu der Lagerdrehachse ausgerichtet ist.

8. Wälzlageranordnung (5;5';5";5⁽³⁾;5⁽⁴⁾) nach einem der vorhergehenden Ansprüche, **dadurch gekennzeichnet, dass** das mittlere Anschlusselement (8) oder eines oder beide der jeweils anderen Anschlusselemente (6,7) entlang einer Hauptebene des Lagers (5;5';5,,;5⁽³⁾;5⁽⁴⁾) unterteilt ist/sind.

9. Wälzlageranordnung (5;5';5";5⁽³⁾;5⁽⁴⁾) nach einem der vorhergehenden Ansprüche, **dadurch gekennzeichnet, dass** ein äußeres Anschlusselement oder beide äußeren Anschlusselemente an einer Stirnseite das mittlere Anschlusselement an einer Stirnseite desselben umgreift (-en), insbesondere so umgreift (-en), dass sich unter Einbeziehung der Wälzkörper ein Formschluss ergibt.

10. Wälzlageranordnung (5;5';5";5⁽³⁾;5⁽⁴⁾) nach einem der vorhergehenden Ansprüche, **dadurch gekennzeichnet, dass** die beiden äußeren Anschlusselemente an einander angrenzen.

11. Windkraftanlage (1) mit einem Windrad (2), das um eine zur Windrichtung etwa parallele Achse rotiert, wobei von der Nabe (3;3';3";3⁽³⁾;3⁽⁴⁾) des Rotors ein oder vorzugsweise mehrere, langgestreckte Rotorblätter (4) etwa radial auskragend sowie mittels je eines Blattlagers (5;5';5";5⁽³⁾;5⁽⁴⁾) um ihre Längsachse verdrehbar angeordnet sind, wobei ein oder mehrere oder alle Blattlager (5;5';5";5⁽³⁾;5⁽⁴⁾) als Wälzlageranordnung (5;5';5";5⁽³⁾;5⁽⁴⁾) nach einem der Ansprüche 1 bis 10 ausgebildet sind.

12. Windkraftanlage (1) nach Anspruch 11, **dadurch gekennzeichnet, dass** die das mittlere Anschlusselement (8) durchdringenden Schrauben oder Bolzen in dem rückwärtigen Ende des Rotorblattes (4) oder in der Nabe (3;3';3";3⁽³⁾;3⁽⁴⁾) eingeschraubt oder mit diesem (dieser) verbunden sind, insbesondere mittels je eines in dem Rotorblatt (4) eingebetteten Verankerungskörpers (50), vorzugsweise eines Verankerungskörpers (50) mit einem Innengewinde.

13. Windkraftanlage (1) nach einem der Ansprüche 11 bis 12, **dadurch gekennzeichnet, dass** die das radial innerste und das radial äußerste Anschlusselement (6,7) durchdringenden Schrauben oder Bolzen in der Nabe (3;3';3";3⁽³⁾;3⁽⁴⁾) oder in dem rückwärtigen Ende des Rotorblattes (4) eingeschraubt oder mit dieser (diesem) verbunden sind.

14. Windkraftanlage (1) nach einem der Ansprüche 11 bis 13, **dadurch gekennzeichnet, dass** an der Nabe (3;3';3";3⁽³⁾;3⁽⁴⁾) oder an dem Rotorblatt (4) ein Anschlussbereich vorgesehen ist, beispielsweise mit zwei konzentrisch ineinander angeordneten Schürzen (55,56), zum Anschluss an dem radial innersten und dem radial äußersten Anschlusselement (6,7) des Blattlagers (5;5';5";5⁽³⁾;5⁽⁴⁾).

15. Windkraftanlage (1) nach einem der Ansprüche 11 bis 14, **gekennzeichnet durch** Inspektionsbohrungen (58), wenigstens in einem vorzugsweise gabelförmigen Anschlussbereich, wodurch die Befestigungsschrauben, - bolzen od. dgl. Befestigungsmittel (22) des mittleren Anschlusselements (8) hindurch zugänglich sind.

## Claims

1. A roller bearing arrangement (5; 5'; 5"; 5⁽³⁾; 5⁽⁴⁾), preferably large-diameter roller bearings, with a diameter of 0.5 m and above, preferably for supporting parts of a wind power plant (1), in particular as blade bearings (5; 5'; 5"; 5⁽³⁾; 5⁽⁴⁾) of a wind power plant (1), with at least three annular connecting elements (6 - 8) which are arranged concentrically to one another and arranged at least section-wise inside each other and rotable relative to each other, each comprising at least one plane connecting surface (15 - 17) for connection to a total of two different machine or plant parts, wherein two each connecting elements (6 - 8) each of which may be rotated against each other are separated by a gap (9, 10) and overlap each other in their radial extension at least partially, wherein furthermore at least two rows each of ball-shaped rolling elements (34, 35) are provided in the area of a gap (9, 10) in the radially overlapping areas of the annular connecting elements (34, 35), which roll along two races (32, 33) which at least section-wise overlap in the radial direction, wherein the centres of the ball-shaped rolling elements of the four ball rows move along four circular paths about the axis of rotation of the roller bearing, whose points of penetration through a cross-section plane of the roller bearing lie radially to its axis of rotation at the corners of a square, wherein the radially innermost connecting element (6) as well as the radially outermost connecting element (7) are connected to a machine or plant part and the radially central connecting element (8) is connected to the respective other machine or plant part, **characterised by**
a) at least one further row of rolling elements (42) whose races do not overlap in the radial direction, wherein
b1) the rolling elements (42) whose races do not overlap in the radial direction roll off against at least one nose (28) of the central connecting element (8) at the free front side and are arranged between two rows of ball-shaped rolling elements (34, 35) whose cross-sectionally concave races (32, 33) overlap in in the radial direction and are each point symmetrical to the cross-sectionally concave races of the diagonally, i. e. axially and radially, offset ball rows in a point reflexion at the point of intersection of a main plane (HA) with a centre axis (MA) which is parallel to the bearing's axis of rotation under the centre radius of a circle of fastening elements (13) of the central connecting element (8), or
b2) the connecting line between two diametrically opposed corners of the square of the centre circular paths of the rolling elements (34, 35) which roll off in radially overlapping races intersects at each of the respective two ball rows (34, 35) about rectangularly the connecting line between the centres of the cross-sectionally concave race sections of a ball row.

2. The roller bearing arrangement (5; 5'; 5"; 5⁽³⁾; 5⁽⁴⁾) according to Claim 1, **characterised in that** the central connecting element (8) is divided into at least three portions in the axial direction, i. e. into a first section adjacent to its connecting surface (16), a second section adjacent to its opposite end face and third section arranged in between which equally jumps forward or backward relative to the first two sections in the radial direction.

3. The roller bearing arrangement (5; 5'; 5"; 5⁽³⁾; 5⁽⁴⁾) according to Claim 1 or 2, **characterised in that** the ball-shaped rolling elements (34, 35) of different rows are of identical size at mutually corresponding positions, and/or that the ball-shaped rolling elements (34, 35) of a four rows are of identical size.

4. The roller bearing arrangement (5; 5'; 5"; 5⁽³⁾; 5⁽⁴⁾) according to any of the previous claims, **characterised in that** in the central connecting element (8) and/or in one or both of the respective other connecting elements (6, 7) fastening elements are provided in a circularly distributed manner, for example, mounting holes (12, 13), preferably through-holes, with longitudinal axes extending parallel to the bearing's axis of rotation, in particular without female threads, wherein at least two, preferably all four ball rows, are equally spaced (A, A', B, B') from the centre radius of the circle of fasting elements (13) of the central connecting element (8).

5. The roller bearing arrangement (5; 5'; 5"; 5⁽³⁾; 5⁽⁴⁾) according to any of the previous claims, **characterised in that** the cross-sections of the races of a row of rolling elements relative to a main plane (HA) of the roller bearing (5; 5'; 5"; 5⁽³⁾; 5⁽⁴⁾) are mirror symmetrical to the cross-sections of the races of an axially offset ball row of, and/or that the cross-sections of the races of a row of rolling elements are mirror-symmetrical to the cross-sections of the races in the cross-sectional plane relative to a centre axis (27; MA) which is parallel to the bearing's axis of rotation of a radially offset ball row.

6. The roller bearing arrangement (5; 5'; 5"; 5⁽³⁾; 5⁽⁴⁾) according to any of the previous claims, **characterised in that** the bearing angles of the ball-shaped rolling elements which roll on between two each at least section-wise radially overlapping races amount to 45° or more, preferably to 50° or more, in particular to 60° or more, preferably to 90°.

7. The roller bearing arrangement (5; 5'; 5"; 5⁽³⁾; 5⁽⁴⁾) according to any of the previous claims, **characterised by** at least one further bearing surface (41) whose bearing angle is less than 45°, e. g. equal to or less than 40°, preferably equal to or less than 30°, in particular approx. 0°, wherein this further bearing surface (41) is preferably implemented as a roller bearing, wherein preferably the rolling elements (42) roll on with a bearing angle of less than 45° between two races (43, 44) which are located radially adjacent to the radially overlapping area of the respective connecting elements (6 - 8), and/or wherein the rolling elements are formed with a bearing angle of less than 45° spherical or cylindrical with a longitudinal axis which is aligned parallel to the bearing's axis of rotation.

8. The roller bearing arrangement (5; 5'; 5"; 5⁽³⁾; 5⁽⁴⁾) according to any of the previous claims, **characterised in that** the central connecting element (8) or one of the respective two other connecting elements (6, 7) are/is subdivided along a main plane of the bearing (5; 5'; 5"; 5⁽³⁾; 5⁽⁴⁾).

9. The roller bearing arrangement (5; 5'; 5"; 5⁽³⁾; 5⁽⁴⁾) according to any of the previous claims, **characterised in that** an outer connecting element or the two outer connecting elements at one end face encompass/es the central connecting element at its one end face of same, in particular in such a manner that together with the rolling elements a positive connection is obtained.

10. The roller bearing arrangement (5; 5'; 5"; 5⁽³⁾; 5⁽⁴⁾) according to any of the previous claims, **characterised in that** the two outer connecting elements are adjacent to each other.

11. A wind power plant (1) with a wind turbine (2) which rotates about an axis of rotation approximately parallel to the wind direction, wherein one or preferably several elongated rotor blades (4) are approximately radially cantilevered arranged from the hub (3; 3'; 3"; 3⁽³⁾; 3⁽⁴⁾) of the rotor and rotatable about their longitudinal axes by means of one blade bearing (5; 5'; 5"; 5⁽³⁾; 5⁽⁴⁾) each, wherein one or several or all blade bearing (5; 5'; 5"; 5⁽³⁾; 5⁽⁴⁾) are formed as roller bearings (5; 5'; 5"; 5⁽³⁾; 5⁽⁴⁾) according to any of Claims 1 to 10.

12. The wind power plant (1) according to Claim 11, **characterised in that** the screws or bolts which are penetrating the central connecting element (8) are screwed into the rear end of the rotor blade (4) or into the hub (3; 3'; 3"; 3⁽³⁾; 3⁽⁴⁾) or are connected with it, in particular by means of an anchoring body (50), preferably an anchoring body (50) with a female thread, which is embedded in the rotor blade (4).

13. The wind power plant (1) according to any of Claims 11 to 12, **characterised in that** the screws or bolts which are penetrating the radially innermost and the radially outermost connecting elements (6, 7) are screwed into the hub (3; 3'; 3"; 3⁽³⁾; 3⁽⁴⁾) or into the rear end of the rotor blade (4) or are connected with it.

14. The wind power plant (1) according to any of Claims 11 to 13, **characterised in that** a connecting area is provided at the hub (3; 3'; 3"; 3⁽³⁾; 3⁽⁴⁾) or at the rotor blade (4), which, for example, comprises two concentrically arranged aprons (55, 56) for the connection at the radially innermost and the radially outermost connecting elements (6, 7) of the blade bearing (5; 5'; 5"; 5⁽³⁾; 5⁽⁴⁾).

15. The wind power plant (1) according to any of Claims 11 to 14, **characterised by** inspection holes (58) at least in a preferably fork-shaped connecting area, which allow to access the fastening screws, bolts or similar fasting means (22) of the central connecting element.

## Revendications

1. Ensemble palier à roulement (5 ; 5' ; 5" ; 5⁽³⁾ ; 5⁽⁴⁾), de préférence palier à roulement de grand dimension ayant un diamètre de 0,5 m ou plus, de préférence pour le montage de parties d'une centrale éolienne (1), en particulier comme palier de pale (5 ; 5' ; 5" ; 5⁽³⁾ ; 5⁽⁴⁾) d'une centrale éolienne (1), comportant au moins trois éléments de liaison annulaires (6-8) disposés concentriquement l'un à l'autre et l'un dans l'autre au moins dans certaines zones, pouvant tourner l'un par rapport à l'autre et présentant chacun au moins une surface de liaison plane (15-17) pour la liaison à, au total, deux parties de machine ou d'installation différentes, dans lequel, respectivement, deux éléments de liaison (6-8) pouvant tourner l'un par rapport à l'autre sont séparés par une fente (9, 10) et se chevauchent au moins partiellement dans leur extension radiale, dans lequel au moins deux rangées de corps de roulement sphériques (34, 35) sont en outre prévues dans la zone d'une fente (9, 10), dans des zones en chevauchement radial des éléments de liaison annulaires (6-8), lesquels corps de roulement roulent chacun le long de deux chemins de roulement (32, 33) se chevauchant dans la direction radiale au moins dans certaines zones, les centres des corps de roulement sphériques des quatre rangées de billes se déplaçant le long de quatre trajectoires circulaires autour de l'axe de rotation du palier à roulement, dont les points d'intersection à travers un plan de section transversale du palier à roulement radialement à son axe de rotation se situent aux angles d'un quadrilatère, l'élément de liaison radialement le plus intérieur (6) et l'élément de liaison radialement le plus extérieur (7) étant reliés à une partie de machine ou d'installation, et l'élément de liaison radialement central (8) étant relié à l'autre partie de machine ou d'installation respective, **caractérisé par**
a) au moins une rangée supplémentaire de corps de roulement (42) dont les chemins de roulement ne se chevauchent pas dans la direction radiale,
b1) les corps de roulement (42) dont les chemins de roulement ne se chevauchent pas dans la direction radiale roulant sur la face frontale libre (40) d'au moins un nez (28) de l'élément de liaison central (8) et étant disposés entre deux rangées de corps de roulement sphériques (34, 35) dont les chemins de roulement (32, 33) concaves en section transversale se chevauchent dans la direction radiale et, dans le cas d'une symétrie ponctuelle à l'intersection d'un plan principal (HA) avec un axe médian (MA) parallèle à l'axe de rotation du palier sous le rayon central d'une couronne d'éléments de fixation (13) de l'élément de liaison central (8), présentant chacun une symétrie ponctuelle par rapport aux sections transversales de chemin de roulement concaves de la rangée de billes décalée diagonalement, c'est-à-dire axialement et radialement, respective, ou
b2) la ligne de liaison entre deux angles diamétralement opposés du quadrilatère des trajectoires circulaires de centre des corps de roulement (34, 35) roulant entre des chemins de roulement se chevauchant dans la direction radiale à chacune des deux rangées de billes concernées (34, 35) coupant chaque fois approximativement à angle droit la ligne de liaison entre les centres des zones osculatrices concaves en section transversale des deux sections transversales de chemin de roulement concaves en section transversale d'une rangée de billes (34, 35).

2. Ensemble palier à roulement (5 ; 5' ; 5" ; 5⁽³⁾ ; 5⁽⁴⁾) selon la revendication 1, **caractérisé en ce que** l'élément de liaison central (8) est divisé dans la direction axiale en au moins trois sections, à savoir une première zone adjacente à sa surface de liaison (16), une deuxième zone adjacente à sa face frontale opposée et une troisième zone disposée entre celles-ci, laquelle est en saillie ou en retrait de façon égale dans la direction radiale par rapport aux deux premières.

3. Ensemble palier à roulement (5 ; 5' ; 5" ; 5⁽³⁾ ; 5⁽⁴⁾) selon la revendication 1 ou 2, **caractérisé en ce que** les corps de roulement sphériques (34, 35) de rangées différentes sont de même dimension à des positions radiales correspondantes et/ou que les corps de roulement sphériques (34, 35) des quatre rangées sont de même dimension.

4. Ensemble palier à roulement (5 ; 5' ; 5" ; 5⁽³⁾ ; 5⁽⁴⁾) selon l'une des revendications précédentes, **caractérisé en ce que** des éléments de fixation, par exemple des trous de fixation (12, 13), répartis en forme de couronne sont prévus respectivement dans l'élément de liaison central (8) et/ou dans l'un ou les deux des autres éléments de liaison respectifs (6, 7), de préférence des trous traversants avec un axe longitudinal parallèle à l'axe de rotation du palier, en particulier sans filetage intérieur, dans lequel, de préférence, au moins deux, de préférence les quatre rangées de billes présentent respectivement des distances égales (A, A', B, B') par rapport au rayon central de la couronne d'éléments de fixation (13) de l'élément de liaison central (8).

5. Ensemble palier à roulement (5 ; 5' ; 5" ; 5⁽³⁾ ; 5⁽⁴⁾) selon l'une des revendications précédentes, **caractérisé en ce que** les sections transversale de chemin de roulement d'une rangée de corps de roulement sont symétriques par rapport à un plan principal (HA) du palier à roulement (5 ; 5' ; 5" ; 5⁽³⁾ ; 5⁽⁴⁾) aux sections transversales de chemin de roulement d'une rangée de billes décalée axialement, et/ou que les sections transversales de chemin de roulement d'une rangée de corps de roulement sont symétriques par rapport à un axe médian (27 ; MA) parallèle à l'axe de rotation du palier dans le plan de section transversale aux sections transversales de chemin de roulement d'une rangée de billes décalée radialement.

6. Ensemble palier à roulement (5 ; 5' ; 5" ; 5⁽³⁾ ; 5⁽⁴⁾) selon l'une des revendications précédentes, **caractérisé en ce que** les angles de portée des corps de roulement sphériques roulant entre deux chemins de roulement se chevauchant au moins dans certaines zones dans la direction radiale sont de 45° ou plus, de préférence de 50° ou plus, en particulier de 60° ou plus, de préférence de 90°.

7. Ensemble palier à roulement (5 ; 5' ; 5" ; 5⁽³⁾ ; 5⁽⁴⁾) selon l'une des revendications précédentes, **caractérisé par** au moins un autre point d'appui (41) dont l'angle de portée est inférieur à 45°, par exemple égal ou inférieur à 40°, de préférence égal ou inférieur à 30°, en particulier d'environ 0°, cet autre point d'appui (41) étant de préférence réalisé sous la forme d'un palier à roulement, dans lequel les corps de roulement (42) roulent de préférence avec un angle de portée inférieur à 45° entre deux chemins de roulement (43, 44) qui sont situés radialement adjacents à la zone de chevauchement radial des éléments de liaison (6-8) respectifs, et/ou dans lequel les corps de roulement ayant un angle de portée inférieur à 45° sont conçus en forme de rouleau ou de cylindre avec un axe longitudinal qui est orienté parallèlement à l'axe de rotation du palier.

8. Ensemble palier à roulement (5 ; 5' ; 5" ; 5⁽³⁾ ; 5⁽⁴⁾) selon l'une des revendications précédentes, **caractérisé en ce que** l'élément de liaison central (8) ou l'un ou les deux des autres éléments de liaison respectifs (6, 7) est/sont divisé(s) le long d'un plan principal du palier (5 ; 5' ; 5" ; 5⁽³⁾ ; 5⁽⁴⁾).

9. Ensemble palier à roulement (5 ; 5' ; 5" ; 5⁽³⁾ ; 5⁽⁴⁾) selon l'une des revendications précédentes, **caractérisé en ce qu'**un élément de liaison extérieur ou les deux éléments de liaison extérieurs entoure(nt) l'élément de liaison central sur une face frontale de celui-ci, en particulier de telle sorte qu'il en résulte une complémentarité de formes en incluant les corps de roulement.

10. Ensemble palier à roulement (5 ; 5' ; 5" ; 5⁽³⁾ ; 5⁽⁴⁾) selon l'une des revendications précédentes, **caractérisé en ce que** les deux éléments de liaison extérieurs sont adjacents.

11. Centrale éolienne (1) comportant une roue éolienne (2) qui tourne autour d'un axe approximativement parallèle à la direction du vent, une ou de préférence plusieurs pales de rotor allongées (4) étant disposées à manière à faire saillie approximativement radialement du moyeu (3 ; 3' ; 3" ; 3⁽³⁾ ; 3⁽⁴⁾) du rotor et à pouvoir tourner autour de leur axe longitudinal au moyen d'un palier de pale (5 ; 5' ; 5" ; 5⁽³⁾ ; 5⁽⁴⁾) respectif, un, plusieurs ou tous les paliers de pale (5 ; 5' ; 5" ; 5⁽³⁾ ; 5⁽⁴⁾) étant réalisés sous la forme d'un ensemble palier à roulement (5 ; 5' ; 5" ; 5⁽³⁾ ; 5⁽⁴⁾) selon l'une des revendications 1 à 10.

12. Centrale éolienne (1) selon la revendication 11, **caractérisée en ce que** les vis ou boulons pénétrant dans l'élément de liaison central (8) sont vissés dans l'extrémité arrière de la pale de rotor (4) ou dans le moyeu (3 ; 3' ; 3" ; 3⁽³⁾ ; 3⁽⁴⁾) ou reliés à celle/celui-ci, en particulier au moyen d'un corps d'ancrage (50) intégré dans la pale de rotor (4), de préférence un corps de fixation (50) muni d'un filetage intérieur.

13. Centrale éolienne (1) selon l'une des revendications 11 à 12, **caractérisée en ce que** les vis ou boulons pénétrant dans l'élément de liaison radialement le plus intérieur et radialement le plus extérieur (6, 7) sont vissés dans le moyeu (3 ; 3' ; 3" ; 3⁽³⁾ ; 3⁽⁴⁾) ou dans l'extrémité arrière de la pale de rotor (4) ou reliés à celui/celle-ci.

14. Centrale éolienne (1) selon l'une des revendications 11 à 13, **caractérisée en ce qu'**une zone de liaison est prévue sur le moyeu (3 ; 3' ; 3" ; 3⁽³⁾ ; 3⁽⁴⁾) ou sur la pale de rotor (4), par exemple avec deux jupes (55, 56) disposées concentriquement l'une dans l'autre, pour la liaison avec l'élément de liaison radialement le plus intérieur et radialement le plus extérieur (6, 7) du palier de pale (5 ; 5' ; 5" ; 5⁽³⁾ ; 5⁽⁴⁾).

15. Centrale éolienne (1) selon l'une des revendications 11 à 14, **caractérisée par** des trous d'inspection (58) au moins dans une zone de liaison de préférence en forme de fourche, à travers lesquels les vis, boulons ou moyens de fixation analogues (22) de l'élément de liaison central (8) sont accessibles.
